# EUROPEAN PATENT APPLICATION

(11) **EP 1 669 390 A1**
(43) Date of publication of application: **14.06.2006**
(21) Application number: 04788325.1
(22) Date of filing: 29.09.2004
(51) Int. Cl.: C08G 73/02, C08G 73/06

(54) **POLYAMINOPYRIDINES AND METHOD FOR PRODUCING SAME**

(30) Priority: 30.09.2003 JP 2003340676; 12.08.2004 JP 2004235390
(71) Applicant: SUMITOMO SEIKA CHEMICALS CO., LTD., Kako-gun, Hyogo 675-0145 (JP); TOKYO INSTITUTE OF TECHNOLOGY, Tokyo 152-8550 (JP)
(72) Inventor: KANBARA, Takaki, Yokohama-shi, Kanagawa 226-8503 (JP); YAMAMOTO, Takakazu, Yokohama-shi, Kanagawa 226-8503 (JP); FUJIMOTO, Nobutaka, Shikama-ku, Himeji-shi (JP); KITAYAMA, Hiroyuki, Osaka-shi, Osaka 541-0041 (JP); OKAMOTO, Masafumi, Shikama-ku, Himeji-shi (JP); FUJIKAKE, Masato, Shikama-ku, Himeji-shi (JP)
(74) Representative: Nicholls, Kathryn Margaret
(86) International application number: PCT/JP2004/014259
(87) International publication number: WO 2005/030838

(57) **Abstract**

The present invention provides novel polyaminopyridines which are excellent in solubility in various solvents, and are preferably used in a polymer-type organic electroluminescent material, and a process for preparing the same. More particularly, the present invention provides polyaminopyridines having a repetition structural unit represented by the following general formula (1); 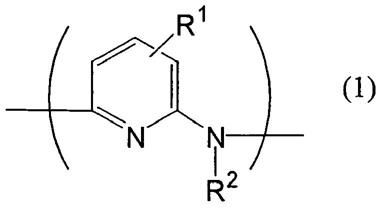 and having a number average molecular weight in a range of 500 to 1000000.

## Description

### Technical Field

The present invention relates to polyaminopyridines and a process for preparing the same. More particularly, the present invention relates to novel polyaminopyridines used in a cell active material, a polymer-type organic electroluminescent material and the like, and a process for preparing the same.

### Background Art

Polyaminopyridines are utilized in electromagnetic wave shielding materials, plastic magnetics and the like, in addition to utilities utilizing the electroconductive function such as condensers, static electricity preventing agents, IC boards, electron beam IC circuit patterning and the like, utility utilizing the redox function such as batteries, electroluminescent elements and the like, utility utilizing electronic device function such as transistors, diodes, solar cells and the like, utility utilizing optical function such as photoconductive materials, high optical communication elements (non-linear optical elements), optical computers and the like.

As such the polyaminopyridines, for example, polyaminopyridines obtained by oxidation-polymerizing aminopyridines are known [see JP-A No.61-85440 (Patent Publication 1)].

However, since polyaminopyridines obtained by oxidation-polymerizing aminopyridine are a polymer in which pyridine rings are bound at a variety of positions, and the polymer is partially branched, and crosslinked, those polyaminopyridines have low solubility in a variety of solvents, and their utility is remarkably restricted. Therefore, there is desired development of novel polyaminopyridines excellent in solubility in various solvents.

Patent Publication 1: JP-A No. 61-85440

### Disclosure of the Invention

### Problems to be solved by the invention

An object of the present invention is to provide novel polyaminopyridines which are excellent in solubility in various solvents, and are suitably used in polymer-type organic electroluminescent materials, and a process for preparing the same.

### Means to solve the problems

That is, the present invention relates to polyaminopyridines having a repetition structural unit represented by the following general formula (1);

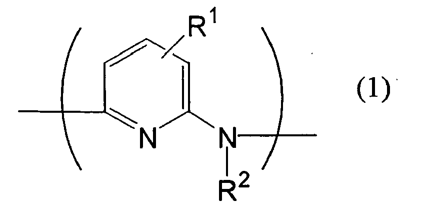

and having a number average molecular weight in a range of 500 to 1000000.

In a first aspect, R¹ represents a hydrogen atom, an alkyl group of a carbon number of 1 to 10, an alkoxy group, an alkanoyl group, a carbamoyl group or a cyano group, and R² represents a phenyl group optionally having a substituent or a pyridyl group optionally having a substituent. Particularly, polyaminopyridines in which R¹ is a hydrogen atom, and R² is a phenyl group or a pyridyl group are preferable.

In a second aspect, R¹ represents a hydrogen atom, an alkyl group of a carbon number of 1 to 10, an alkoxy group, an alkanoyl group, a carbamoyl group or a cyano group, and R² represents a pyrimidyl group optionally having a substituent, a naphthyl group optionally having a substituent, or a quinolyl group optionally having a substituent. Particularly, polyaminopyridines in which R¹ is a hydrogen atom, and R² is a pyrimidyl group, a naphthyl group or a quinolyl group are preferable.

In a third aspect, R¹ represents a hydrogen atom, an alkyl group of a carbon number of 1 to 10, an alkoxy group, an alkanoyl group, a carbamoyl group or a cyano group, and R² represents an anthryl group optionally having a substituent or a pyrenyl group optionally having a substituent. Particularly, polyaminopyridines in which R¹ is a hydrogen atom, and R² is an anthryl group or a pyrenyl group are preferable.

Also, the present invention relates to a process for preparing polyaminopyridines having a repetition structural unit represented by the following general formula (1);

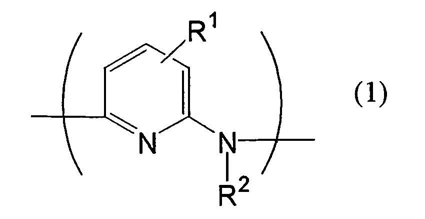

(wherein R¹ and R² are as defined above) and having a number average molecular weight in a range of 500 to 1000000.

The process for preparing polyaminopyridines of the present invention comprises reacting 2,6-dihalogenopyridines represented by the following general formula (2);

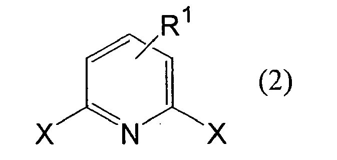

(wherein R¹ is as defined in the general formula (1), and X represents a halogen atom)
and an aromatic amine compound represented by the following general formula (3);

R²-NH₂ (3)

(wherein R² is as defined in the general formula (1)) using a palladium compound and a phosphine compound as a catalyst in the presence of a base.

### Effect of the invention

According to the present invention, novel polyaminopyridines which are excellent in solubility in a variety of solvents, and are suitably used in a polymer-type organic electroluminescent material can be provided.

### Best Mode for Carrying Out the Invention

Polyaminopyridines of the present invention are a compound represented by the general formula (1).
In the general formula (1), R¹ represents a hydrogen atom, an alkyl group of a carbon number of 1 to 10, an alkoxy group, an alkanoyl group, a carbamoyl group or a cyano group, and R² represents a phenyl group optionally having a substituent, a pyridyl group optionally having a substituent, a pyrimidyl group optionally having a substituent, a naphthyl group optionally having a substituent, a quinolyl group optionally having a substituent, an anthryl group optionally having a substituent, or a pyrenyl group optionally having a substituent.

Examples of the alkyl group of a carbon number of 1 to 10 include methyl group, ethyl group, n-propyl group, isopropyl group, n-butyl group, isobutyl group, sec-butyl group, tert-butyl group, n-pentyl group, isopentyl group, neopentyl group, n-hexyl group, isohexyl group, n-octyl group, n-decyl group and the like.

Examples of the alkoxy group include methoxy group, ethoxy group and the like.

Examples of the alkanoyl group include methanoyl group, ethanoly group and the like.

Examples of the phenyl group optionally having a substituent include phenyl group, 2-methylphenyl group, 2-ethylpheynyl group, 2-n-hexylphenyl group, 2-n-octylpheyl group, 2-n-decylphenyl group, 4-methylpheynyl group, 4-ethylphenyl group, 4-n-hexylphenyl group, 4-n-octylphenyl group, 4-n-decylphenyl group, 2,4-dimethylphenyl group, 2,4-diethylphenyl group, 2,4-di-n-hexylphenyl group, 2,4-di-n-octylphenyl group, 2,4-di-n-decylphenyl group, 2-methoxyphenyl group, 2-methanoylphenyl group, 2-carbamoylphenyl group, 2-cyanophenyl group, 4-methoxyphenyl group, 4-methanoylphenyl group, 4-carbamoylphenyl group, 4-cyanophenyl group and the like.

Examples of the pyridyl group optionally having a substituent include 2-pyridyl group, 3-pyridyl group, 4-pyridyl group, 3-methyl-2-pyridyl group, 3-ethyl-2-pyridyl group, 3-n-hexyl-2-pyridyl group, 3-n-octyl-2-pyridyl group, 3-n-decyl-2-pyridyl group, 5-methyl-2-pyridyl group, 5-ethyl-2-pyridyl group, 5-n-hexyl-2-pyridyl group, 5-n-octyl-2-pyridyl group, 5-n-decyl-2-pyridyl group, 2-methyl-3-pyridyl group, 2-ethyl-3-pyridyl group, 2-n-hexyl-3-pyridyl group, 2-n-octyl-3-pyridyl group, 2-n-decyl-3-pyridyl group, 4-methyl-3-pyridyl group, 4-ethyl-3-pyridyl group, 4-n-hexyl-3-pyridyl group, 4-n-octyl-3-pyridyl group, 4-n-decyl-3-pyridyl group, 6-methyl-3-pyridyl group, 6-ethyl-3-pyridyl group, 6-n-hexyl-3-pyridyl group, 6-n-octyl-3-pyridyl group, 6-n-decyl-3-pyridyl group, 3-methyl-4-pyridyl group, 3-ethyl-4-pyridyl group, 3-n-hexyl-4-pyridyl group, 3-n-octyl-4-pyridyl group, 3-n-decyl-4-pyridyl group, 5-methyl-4-pyridyl group, 5-ethyl-4-pyridyl group, 5-n-hexyl-4-pyridyl group, 5-n-octyl-4-pyridyl group, 5-n-decyl-4-pyridyl group, 3-methoxy-2-pyridyl group, 3-methanoyl-2-pyridyl group, 3-carbamoyl-2-pyridyl group, 3-cyano-2-pyridyl group, 5-methoxy-2-pyridyl group, 5-methanoyl-2-pyridyl group, 5-carbamoyl-2-pyridyl group, 5-cyano-2-pyridyl group, 2-methoxy-3-pyridyl group, 2-methanoyl-3-pyridyl group, 2-carbamoyl-3-pyridyl group, 2-cyano-3-pyridyl group, 4-methoxy-3-pyridyl group, 4-methanoyl-3-pyridyl group, 4-carbamoyl-3-pyridyl group, 4-cyano-3-pyridyl group, 6-methoxy-3-pyridyl group, 6-methanoyl-3-pyridyl group, 6-carbamoyl-3-pyridyl group, 6-cyano-3-pyridyl group, 3-methoxy-4-pyridyl group, 3-methanoyl-4-pyridyl group, 3-carbamoyl-4-pyridyl group, 3-cyano-4-pyridyl group, 5-methoxy-4-pyridyl group, 5-methanoyl-4-pyridyl group, 5-carbamoyl-4-pyridyl group, 5-cyano-4-pyridyl group and the like.

Examples of the pyrimidyl group optionally having a substituent include 2-pyrimidyl group, 5-methyl-2-pyrimidyl group, 5-ehtyl-2-pyrimidyl group, 5-n-hexyl-2-pyrimidyl group, 5-n-octyl-2-pyrimidyl group, 5-n-decyl-2-pyrimidyl group, 5-methoxy-2-pyrimidyl group, 5-methanoyl-2-pyrimidyl group, 5-carbamoyl-2-pyrimidyl group, 5-cyano-2-pyrimidyl group and the like.

Examples of the naphthyl group optionally having a substituent include 1-naphthyl group, 2-naphthyl group, 2-methyl-1-naphthyl group, 2-ethyl-1-naphthyl group, 2-n-hexyl-1-naphthyl group, 2-n-octyl-1-naphthyl group, 2-n-decyl-1-naphthyl group, 3-methyl-1-naphthyl group, 3-ethyl-1-naphthyl group, 3-n-hexyl-1-naphthyl group, 3-n-octyl-1-naphthyl group, 3-n-decyl-1-naphthyl group, 4-methyl-1-naphthyl group, 4-ethyl-1-naphthyl group, 4-n-hexyl-1-naphthyl group, 4-n-octyl-1-naphthyl group, 4-n-decyl-1-naphthyl group, 5-methyl-1-naphthyl group, 5-ethyl-1-naphthyl group, 5-n-hexyl-1-naphthyl group, 5-n-octyl-1-naphthyl group, 5-n-decyl-1-naphthyl group, 6-methyl-1-naphthyl group, 6-ethyl-1-naphthyl group, 6-n-hexyl-1-naphthyl group, 6-n-octyl-1-naphthyl group, 6-n-decyl-1-naphthyl group, 7-methyl-1-naphthyl group, 7-ethyl-1-naphthyl group, 7-n-hexyl-1-naphthyl group, 7-n-octyl-1-naphthyl group, 7-n-decyl-1-naphthyl group, 8-methyl-1-naphthyl group, 8-ethyl-1-naphthyl group, 8-n-hexyl-1-naphthyl group, 8-n-octyl-1-naphthyl group, 8-n-decyl-1-naphthyl group, 1-methyl-2-naphthyl group, 1-ethyl-2-naphthyl group, 1-n-hexyl-2-naphthyl group, 1-n-octyl-2-naphthyl group, 1-n-decyl-2-naphthyl group, 3-methyl-2-naphthyl group, 3-ethyl-2-naphthyl group, 3-n-hexyl-2-naphthyl group, 3-n-octyl-2-naphthyl group, 3-n-decyl-2-naphthyl group, 4-methyl-2-naphthyl group, 4-ethyl-2-naphthyl group, 4-n-hexyl-2-naphthyl group, 4-n-octyl-2-naphthyl group, 4-n-decyl-2-naphthyl group, 5-methyl-2-naphthyl group, 5-ethyl-2-naphthyl group, 5-n-hexyl-2-naphthyl group, 5-n-octyl-2-naphthyl group, 5-n-decyl-2-naphthyl group, 6-methyl-2-naphthyl group, 6-ethyl-2-naphthyl group, 6-n-hexyl-2-naphthyl group, 6-n-octyl-2-naphthyl group, 6-n-decyl-2-naphthyl group, 7-methyl-2-naphthyl group, 7-ethyl-2-naphthyl group, 7-n-hexyl-2-naphthyl group, 7-n-octyl-2-naphthyl group, 7-n-decyl-2-naphthyl group, 8-methyl-2-naphthyl group, 8-ethyl-2-naphthyl group, 8-n-hexyl-2-naphthyl group, 8-n-octyl-2-naphthyl group, 8-n-decyl-2-naphthyl group, 2-methoxy-1-naphthyl group, 2-methanoyl-1-naphthyl group, 2-carbamoyl-1-naphthyl group, 2-cyano-1-naphthyl group, 3-methoxy-1-naphthyl group, 3-methanoyl-1-naphthyl group, 3-carbamoyl-1-naphthyl group, 3-cyano-1-naphthyl group, 4-methoxy-1-naphthyl group, 4-methanoyl-1-naphthyl group, 4-carbamoyl-1-naphthyl group, 4-cyano-1-naphthyl group, 5-methoxy-1-naphthyl group, 5-methanoyl-1-naphthyl group, 5-carbamoyl-1-naphthyl group, 5-cyano-1-naphthyl group, 6-methoxy-1-naphthyl group, 6-methanoyl-1-naphthyl group, 6-carbamoyl-1-naphthyl group, 6-cyano-1-naphthyl group, 7-methoxy-1-naphthyl group, 7-methanoyl-1-naphthyl group, 7-carbamoyl-1-naphthyl group, 7-cyano-1-naphthyl group, 8-methoxy-1-naphthyl group, 8-methanoyl-1-naphthyl group, 8-carbamoyl-1-naphthyl group, 8-cyano-1-naphthyl group, 1-methoxy-2-naphthyl group, 1-methanoyl-2-naphthyl group, 1-carbamoyl-2-naphthyl group, 1-cyano-2-naphthyl group, 3-methoxy-2-naphthyl group, 3-methanoyl-2-naphthyl group, 3-carbamoyl-2-naphthyl group, 3-cyano-2-naphthyl group, 4-methoxy-2-naphthyl group, 4-methanoyl-2-naphthyl group, 4-carbamoyl-2-naphthyl group, 4-cyano-2-naphthyl group, 5-methoxy-2-naphthyl group, 5-methanoyl-2-naphthyl group, 5-carbamoyl-2-naphthyl group, 5-cyano-2-naphthyl group, 6-methoxy-2-naphthyl group, 6-methanoyl-2-naphthyl group, 6-carbamoyl-2-naphthyl group, 6-cyano-2-naphthyl group, 7-methoxy-2-naphthyl group, 7-methanoyl-2-naphthyl group, 7-carbamoyl-2-naphthyl group, 7-cyano-2-naphthyl group, 8-methoxy-2-naphthyl group, 8-methanoyl-2-naphthyl group, 8-carbamoyl-2-naphthyl group, 8-cyano-2-naphthyl group and the like.

Examples of the quinolyl group optionally having a substituent include 2-quinolyl group, 3-quinolyl group, 4-quinolyl group, 5-quinolyl group, 6-quinolyl group, 7-quinolyl group, 8-quinolyl group, 3-methyl-2-quinolyl group, 3-ethyl-2-quinolyl group, 3-n-hexyl-2-quinolyl group, 3-n-octyl-2-quinolyl group, 3-n-decyl-2-quinolyl group, 4-methyl-2-quinolyl group, 4-ethyl-2-quinolyl group, 4-n-hexyl-2-quinolyl group, 4-n-octyl-2-quinolyl group, 4-n-decyl-2-quinolyl group, 5-methyl-2-quinolyl group, 5-ethyl-2-quinolyl group, 5-n-hexyl-2-quinolyl group, 5-n-octyl-2-quinolyl group, 5-n-decyl-2-quinolyl group, 6-methyl-2-quinolyl group, 6-ethyl-2-quinolyl group, 6-n-hexyl-2-quinolyl group, 6-n-octyl-2-quinolyl group, 6-n-decyl-2-quinolyl group, 7-methyl-2-quinolyl group, 7-ethyl-2-quinolyl group, 7-n-hexyl-2-quinolyl group, 7-n-octyl-2-quinolyl group, 7-n-decyl-2-quinolyl group, 8-methyl-2-quinolyl group, 8-ethyl-2-quinolyl group, 8-n-hexyl-2-quinolyl group, 8-n-octyl-2-quinolyl group, 8-n-decyl-2-quinolyl group, 2-methyl-3-quinolyl group, 2-ehtyl-3-quinolyl group, 2-n-hexyl-3-quinolyl group, 2-n-octyl-3-quinolyl group, 2-n-decyl-3-quinolyl group, 4-methyl-3-quinolyl group, 4-ethyl-3-quinolyl group, 4-n-hexyl-3-quinolyl group, 4-n-octyl-3-quinolyl group, 4-n-decyl-3-quinolyl group, 5-methyl-3-quinolyl group, 5-ethyl-3-quinolyl group, 5-n-hexyl-3-quinolyl group, 5-n-octyl-3-quinolyl group, 5-n-decyl-3-quinolyl group, 6-methyl-3-quinolyl group, 6-ethyl-3-quinolyl group, 6-n-hexyl-3-quinolyl group, 6-n-octyl-3-quinolyl group, 6-n-decyl-3-quinolyl group, 7-methyl-3-quinolyl group, 7-ethyl-3-quinolyl group, 7-n-hexyl-3-quinolyl group, 7-n-octyl-3-quinolyl group, 7-n-decyl-3-quinolyl group, 8-methyl-3-quinolyl group, 8-ethyl-3-quinolyl group, 8-n-hexyl-3-quinolyl group, 8-n-octyl-3-quinolyl group, 8-n-decyl-3-quinolyl group, 2-methyl-4-quinolyl group, 2-ethyl-4-quinolyl group, 2-n-hexyl-4-quinolyl group, 2-n-octyl-4-quinolyl group, 2-n-decyl-4-quinolyl group, 3-methyl-4-quinolyl group, 3-ethyl-4-quinolyl group, 3-n-hexyl-4-quinolyl group, 3-n-octyl-4-quinolyl group, 3-n-decyl-4-quinolyl group, 5-methyl-4-quinolyl group, 5-ethyl-4-quinolyl group, 5-n-hexyl-4-quinolyl group, 5-n-octyl-4-quinolyl group, 5-n-decyl-4-quinolyl group, 6-methyl-4-quinolyl group, 6-ethyl-4-quinolyl group, 6-n-hexyl-4-quinolyl group, 6-n-octyl-4-quinolyl group, 6-n-decyl-4-quinolyl group, 7-methyl-4-quinolyl group, 7-ethyl-4-quinolyl group, 7-n-hexyl-4-quinolyl group, 7-n-octyl-4-quinolyl group, 7-n-decyl-4-quinolyl group, 8-methyl-4-quinolyl group, 8-ethyl-4-quinolyl group, 8-n-hexyl-4-quinolyl group, 8-n-octyl-4-quinolyl group, 8-n-decyl-4-quinolyl group, 3-methoxy-2-quinolyl group, 3-methanoyl-2-quinolyl group, 3-carbamoyl-2-quinolyl group, 3-cyano-2-quinolyl group, 4-methoxy-2-quinolyl group, 4-methanoyl-2-quinolyl group, 4-carbamoyl-2-quinolyl group, 4-cyano-2-quinolyl group, 5-methoxy-2-quinolyl group, 5-methanoyl-2-quinolyl group, 5-carbamoyl-2-quinolyl group, 5-cyano-2-quinolyl group, 6-methoxy-2-quinolyl group, 6-methanoyl-2-quinolyl group, 6-carbamoyl-2-quinolyl group, 6-cyano-2-quinolyl group, 7-methoxy-2-quinolyl group, 7-methanoyl-2-quinolyl group, 7-carbamoyl-2-quinolyl group, 7-cyano-2-quinolyl group, 8-methoxy-2-quinolyl group, 8-methanoyl-2-quinolyl group, 8-carbamoyl-2-quinolyl group, 8-cyano-2-quinolyl group, 2-methoxy-3-quinolyl group, 2-methanoyl-3-quinolyl group, 2-carabamoyl-3-quinolyl group, 2-cyano-3-quinolyl group, 4-methoxy-3-quinolyl group, 4-methanoyl-3-quinolyl group, 4-carbamoyl-3-quinolyl group, 4-cyano-3-quinolyl group, 5-methoxy-3-quinolyl group, 5-methanoyl-3-quinolyl group, 5-carbamoyl-3-quinolyl group, 5-cyano-3-quinolyl group, 6-methoxy-3-quinolyl group, 6-methanoyl-3-quinolyl group, 6-carbamoyl-3-quinolyl group, 6-cyano-3-quinolyl group, 7-methoxy-3-quinolyl group, 7-methanoyl-3-quinolyl group, 7-carbamoyl-3-quinolyl group, 7-cyano-3-quinolyl group, 8-methoxy-3-quinolyl group, 8-methanoyl-3-quinolyl group, 8-carbamoyl-3-quinolyl group, 8-cyano-3-quinolyl group, 2-methoxy-4-quinolyl group, 2-methanoyl-4-quinolyl group, 2-carbamoyl-4-quinolyl group, 2-cyano-4-quinolyl group, 3-methoxy-4-quinolyl group, 3-methanoyl-4-quinolyl group, 3-carbamoyl-4-quinolyl group, 3-cyano-4-quinolyl group, 5-methoxy-4-quinolyl group, 5-methanoyl-4-quinolyl group, 5-carbamoyl-4-quinolyl group, 5-cyano-4-quinolyl group, 6-methoxy-4-quinolyl group, 6-methanoyl-4-quinolyl group, 6-carbamoyl-4-quinolyl group, 6-cyano-4-quinolyl group, 7-methoxy-4-quinolyl group, 7-methanoyl-4-quinolyl group, 7-carbamoyl-4-quinolyl group, 7-cyano-4-quinolyl group, 8-methoxy-4-quinolyl group, 8-methanoyl-4-quinolyl group, 8-carbamoyl-4-quinolyl group, 8-cyano-4-quinolyl group, and the like.

Examples of the anthryl group optionally having a substituent include 1-anthryl group, 2-anthryl group, 9-anthryl group, 2-methyl-1-anthryl group, 2-ethyl-1-anthryl group, 2-n-hexyl-1-anthryl group, 2-n-octyl-1-anthryl group, 2-n-decyl-1-anthryl group, 3-methyl-1-anthryl group, 3-ethyl-1-anthryl group, 3-n-hexyl-1-anthryl group, 3-n-octyl-1-anthryl group, 3-n-decyl-1-anthryl group, 4-methyl-1-anthryl group, 4-ethyl-1-anthryl group, 4-n-hexyl-1-anthryl group, 4-n-octyl-1-anthryl group, 4-n-decyl-1-anthryl group, 5-methyl-1-anthryl group, 5-ethyl-1-anthryl group, 5-n-hexyl-1-anthryl group, 5-n-octyl-1-anthryl group, 5-n-decyl-1-anthyrl group, 6-methyl-1-anthryl group, 6-ethyl-1-anthryl group, 6-n-hexyl-1-anthryl group, 6-n-octyl-1-anthryl group, 6-n-decyl-1-anthryl group, 7-methyl-1-anthryl group, 7-ethyl-1-anthryl group, 7-n-hexyl-1-anthryl group, 7-n-octyl-1-anthryl group, 7-n-decyl-1-anthryl group, 8-methyl-1-anthryl group, 8-ethyl-1-anthryl group, 8-n-hexyl-1-anthryl group, 8-n-octyl-1-anthryl group, 8-n-decyl-1-anthryl group, 9-methyl-1-anthryl group, 9-ethyl-1-anthryl group, 9-n-hexyl-1-anthryl group, 9-n-octyl-1-anthryl group, 9-n-decyl-1-anthryl group, 10-methyl-1-anthryl group, 10-ethyl-1-anthryl group, 10-n-hexyl-1-anthryl group, 10-n-octyl-1-anthryl group, 10-n-decyl-1-anthryl group, 1-methyl-2-anthryl group, 1-ethyl-2-anthryl group, 1-n-hexyl-2-anthryl group, 1-n-octyl-2-anthryl group, 1-n-decyl-2-anthryl group, 3-methyl-2-anthryl group, 3-ethyl-2-anthryl group, 3-n-hexyl-2-anthryl group, 3-n-octyl-2-anthryl group, 3-n-decyl-2-anthryl group, 4-methyl-2-anthryl group, 4-ethyl-2-anthryl group, 4-n-hexyl-2-anthryl group, 4-n-octyl-2-anthryl group, 4-n-decyl-2-anthryl group, 5-methyl-2-anthryl group, 5-ethyl-2-anthryl group, 5-n-hexyl-2-anthryl group, 5-n-octyl-2-anthryl group, 5-n-decyl-2-anthryl group, 6-methyl-2-anthryl group, 6-ethyl-2-anthryl group, 6-n-hexyl-2-anthryl group, 6-n-octyl-2-anthryl group, 6-n-decyl-2-anthryl group, 7-methyl-2-anthryl group, 7-ethyl-2-anthryl group, 7-n-hexyl-2-anthryl group, 7-n-octyl-2-anthryl group, 7-n-decyl-2-anthryl group, 8-methyl-2-anthryl group, 8-ethyl-2-anthryl group, 8-n-hexyl-2-anthryl group, 8-n-octyl-2-anthryl group, 8-n-decyl-2-anthryl group, 9-methyl-2-anthryl group, 9-ethyl-2-anthryl group, 9-n-hexyl-2-anthryl group, 9-n-octyl-2-anthryl group, 9-n-decyl-2-anthryl group, 10-methyl-2-anthryl group, 10-ethyl-2-anthryl group, 10-n-hexyl-2-anthryl group, 10-n-octyl-2-anthryl group, 10-n-decyl-2-anthryl group, 1-methyl-9-anthryl group, 1-ethyl-9-anthryl group, 1-n-hexyl-9-anthryl group, 1-n-octyl-9-anthryl group, 1-n-decyl-9-anthryl group, 2-methyl-9-anthryl group, 2-ethyl-9-anthryl group, 2-n-hexyl-9-anthryl group, 2-n-octyl-9-anthryl group, 2-n-decyl-9-anthryl group, 3-methyl-9-anthryl group, 3-ethyl-9-anthryl group, 3-n-hexyl-9-anthryl group, 3-n-octyl-9-anthryl group, 3-n-decyl-9-anthryl group, 4-methyl-9-anthryl group, 4-ethyl-9-anthryl group, 4-n-hexyl-9-anthryl group, 4-n-octyl-9-anthryl group, 4-n-decyl-9-anthryl group, 10-methyl-9-anthryl group, 10-ethyl-9-anthryl group, 10-n-hexyl-9-anthryl group, 10-n-octyl-9-anthryl group, 10-n-decyl-9-anthryl group, 2-methoxy-1-anthryl group, 2-methanoyl-1-anthryl group, 2-carbamoyl-1-anthryl group, 2-cyano-1-anthryl group, 3-methoxy-1-anthryl group, 3-methanoyl-1-anthryl group, 3-carbamoyl-1-anthryl group, 3-cyano-1-anthryl group, 4-methoxy-1-anthryl group, 4-methanoyl-1-anthryl group, 4-carbamoyl-1-anthryl group, 4-cyano-1-anthryl group, 5-methoxy-1-anthryl group, 5-methanoyl-1-anthryl group, 5-carbamoyl-1-anthryl group, 5-cyano-1-anthryl group, 6-methoxy-1-anthryl group, 6-methanoyl-1-anthryl group, 6-carbamoyl-1-anthryl group, 6-cyano-1-anthryl group, 7-methoxy-1-anthryl group, 7-methanoyl-1-anthryl group, 7-carbamoyl-1-anthryl group, 7-cyano-1-anthryl group, 8-methoxy-1-anthryl group, 8-methanoyl-1-anthryl group, 8-carbamoyl-1-anthryl group, 8-cyano-1-anthryl group, 9-methoxy-1-anthryl group, 9-methanoyl-1-anthryl group, 9-carbamoyl-1-anthryl group, 9-cyano-1-anthryl group, 10-methoxy-1-anthryl group, 10-methanoyl-1-anthryl group, 10-carbamoyl-1-anthryl group, 10-cyano-1-anthryl group, 1-methoxy-2-anthryl group, 1-methanoyl-2-anthryl group, 1-carbamoyl-2-anthryl group, 1-cyano-2-anthryl group, 3-methoxy-2-anthryl group, 3-methanoyl-2-anthryl group, 3-carbamoyl-2-anthryl group, 3-cyano-2-anthryl group, 4-methoxy-2-anthryl group, 4-methanoyl-2-anthryl group, 4-carbamoyl-2-anthryl group, 4-cyano-2-anthryl group, 5-methoxy-2-anthryl group, 5-methanoyl-2-anthryl group, 5-carbamoyl-2-anthryl group, 5-cyano-2-anthryl group, 6-methoxy-2-anthryl group, 6-methanoyl-2-anthryl group, 6-carbamoyl-2-anthryl group, 6-cyano-2-anthryl group, 7-methoxy-2-anthryl group, 7-methanoyl-2-anthyrl group, 7-carbamoyl-2-anthryl group, 7-cyano-2-anthryl group, 8-methoxy-2-anthryl group, 8-methanoyl-2-anthryl group, 8-carbamoyl-2-anthryl group, 8-cyano-2-anthryl group, 9-methoxy-2-anthryl group, 9-methanoyl-2-anthryl group, 9-carbamoyl-2-anthryl group, 9-cyano-2-anthryl group, 10-methoxy-2-anthryl group, 10-methanoyl-2-anthryl group, 10-carbamoyl-2-anthryl group, 10-cyano-2-anthryl group, 1-methoxy-9-anthryl group, 1-methanoyl-9-anthryl group, 1-carbamoyl-9-anthryl group, 1-cyano-9-anthryl group, 2-methoxy-9-anthryl group, 2-methanoyl-9-anthryl group, 2-carbamoyl-9-anthryl group, 2-cyano-9-anthryl group, 3-methoxy-9-anthryl group, 3-methanoyl-9-anthryl group, 3-carbamoyl-9-anthryl group, 3-cyano-9-anthryl group, 4-methoxy-9-anthryl group, 4-methanoyl-9-anthryl group, 4-carbamoyl-9-anthryl group, 4-cyano-9-anthryl group, 10-methoxy-9-anthryl group, 10-methanoyl-9-anthryl group, 10-carbamoyl-9-anthryl group, 10-cyano-9-anthryl group and the like.

Examples of the pyrenyl group optionally having a substituent include 1-pyrenyl group, 2-pyrenyl group, 2-methyl-1-pyrenyl group, 2-ethyl-1-pyrenyl group, 2-n-hexyl-1-pyrenyl group, 2-n-octyl-1-pyrenyl group, 2-n-decyl-1-pyrenyl group, 3-methyl-1-pyrenyl group, 3-ethyl-1-pyrenyl group, 3-n-hexyl-1-pyrenyl group, 3-n-octyl-1-pyrenyl group, 3-n-decyl-1-pyrenyl group, 4-methyl-1-pyrenyl group, 4-ethyl-1-pyrenyl group, 4-n-hexyl-1-pyrenyl group, 4-n-octyl-1-pyrenyl group, 4-n-decyl-1-pyrenyl group, 5-methyl-1-pyrenyl group, 5-ethyl-1-pyrenyl group, 5-n-hexyl-1-pyrenyl group, 5-n-octyl-1-pyrenyl group, 5-n-decyl-1-pyrenyl group, 6-methyl-1-pyrenyl group, 6-ethyl-1-pyrenyl group, 6-n-hexyl-1-pyrenyl group, 6-n-octyl-1-pyrenyl group, 6-n-decyl-1-pyrenyl group, 7-methyl-1-pyrenyl group, 7-ethyl-1-pyrenyl group, 7-n-hexyl-1-pyrenyl group, 7-n-octyl-1-pyrenyl group, 7-n-decyl-1-pyrenyl group, 8-methyl-1-pyrenyl group, 8-ethyl-1-pyrenyl group, 8-n-hexyl-1-pyrenyl group, 8-octyl-1-pyrenyl group, 8-n-decyl-1-pyrenyl group, 9-methyl-1-pyrenyl group, 9-ethyl-1-pyrenyl group, 9-n-hexyl-1-pyrenyl group, 9-n-octyl-1-pyrenyl group, 9-n-decyl-1-pyrenyl group, 10-methyl-1-pyrenyl group, 10-ethyl-1-pyrenyl group, 10-n-hexyl-1-pyrenyl group, 10-n-octyl-1-pyrenyl group, 10-n-decyl-1-pyrenyl group, 1-methyl-2-pyrenyl group, 1-ethyl-2-pyrenyl group, 1-n-hexyl-2-pyrenyl group, 1-n-octyl-2-pyrenyl group, 1-n-decyl-2-pyrenyl group, 3-methyl-2-pyrenyl group, 3-ethyl-2-pyrenyl group, 3-n-hexyl-2-pyrenyl group, 3-n-octyl-2-pyrenyl group, 3-n-decyl-2-pyrenyl group, 4-methyl-2-pyrenyl group, 4-ethyl-2-pyrenyl group, 4-n-hexyl-2-pyrenyl group, 4-n-octyl-2-pyrenyl group, 4-n-decyl-2-pyrenyl group, 5-methyl-2-pyrenyl group, 5-ethyl-2-pyrenyl group, 5-n-hexyl-2-pyrenyl group, 5-n-octyl-2-pyrenyl group, 5-n-decyl-2-pyrenyl group, 6-methyl-2-pyrenyl group, 6-ethyl-2-pyrenyl group, 6-n-hexyl-2-pyrenyl group, 6-n-octyl-2-pyrenyl group, 6-n-decyl-2-pyrenyl group, 7-methyl-2-pyrenyl group, 7-ethyl-2-pyrenyl group, 7-n-hexyl-2-pyrenyl group, 7-n-octyl-2-pyrenyl group, 7-n-decyl-2-pyrenyl group, 8-methyl-2-pyrenyl group, 8-ethyl-2-pyrenyl group, 8-n-hexyl-2-pyrenyl group, 8-octyl-2-pyrenyl group, 8-n-decyl-2-pyrenyl group, 9-methyl-2-pyrenyl group, 9-ethyl-2-pyrenyl group, 9-n-hexyl-2-pyrenyl group, 9-n-octyl-2-pyrenyl group, 9-n-decyl-2-pyrenyl group, 10-methyl-2-pyrenyl group, 10-ethyl-2-pyrenyl group, 10-n-hexyl-2-pyrenyl group, 10-n-octyl-2-pyrenyl group, 10-n-decyl-2-pyrenyl group, 2-methoxy-1-pyrenyl group, 2-methanoyl-1-pyrenyl group, 2-carbamoyl-1-pyrenyl group, 2-cyano-1-pyrenyl group, 3-methoxy-1-pyrenyl group, 3-methanoyl-1-pyrenyl group, 3-carbamoyl-1-pyrenyl group, 3-cyano-1-pyrenyl group, 4-methoxy-1-pyrenyl group, 4-methanoyl-1-pyrenyl group, 4-carbamoyl-1-pyrenyl group, 4-cyano-1-pyrenyl group, 5-methoxy-1-pyrenyl group, 5-methanoyl-1-pyrenyl group, 5-carbamoyl-1-pyrenyl group, 5-cyano-1-pyrenyl group, 6-methoxy-1-pyrenyl group, 6-methanoyl-1-pyrenyl group, 6-carbamoyl-1-pyrenyl group, 6-cyano-1-pyrenyl group, 7-methoxy-1-pyrenyl group, 7-methanoyl-1-pyrenyl group, 7-carbamoyl-1-pyrenyl group, 7-cyano-1-pyrenyl group, 8-methoxy-1-pyrenyl group, 8-methanoyl-1-pyrenyl group, 8-carbamoyl-1-pyrenyl group, 8-cyano-1-pyrenyl group, 9-methoxy-1-pyrenyl group, 9-methanoyl-1-pyrenyl group, 9-carbamoyl-1-pyrenyl group, 9-cyano-1-pyrenyl group, 10-methoxy-1-pyrenyl group, 10-methanoyl-1-pyrenyl group, 10-carbamoyl-1-pyrenyl group, 10-cyano-1-pyrenyl group, 2-methoxy-2-pyrenyl group, 2-methanoyl-2-pyrenyl group, 2-carbamoyl-2-pyrenyl group, 2-cyano-2-pyrenyl group, 3-methoxy-2-pyrenyl group, 3-methanoyl-2-pyrenyl group, 3-carbamoyl-2-pyrenyl group, 3-cyano-2-pyrenyl group, 4-methoxy-2-pyrenyl group, 4-methanoyl-2-pyrenyl group, 4-carbamoyl-2-pyrenyl group, 4-cyano-2-pyrenyl group, 5-methoxy-2-pyrenyl group, 5-methanoyl-2-pyrenyl group, 5-carbamoyl-2-pyrenyl group, 5-cyano-2-pyrenyl group, 6-methoxy-2-pyrenyl group, 6-methanoyl-2-pyrenyl group, 6-carbamoyl-2-pyrenyl group, 6-cyano-2-pyrenyl group, 7-methoxy-2-pyrenyl group, 7-methanoyl-2-pyrenyl group, 7-carbamoyl-2-pyrenyl group, 7-cyano-2-pyrenyl group, 8-methoxy-2-pyrenyl group, 8-methanoyl-2-pyrenyl group, 8-carbamoyl-2-pyrenyl group, 8-cyano-2-pyrenyl group, 9-methoxy-2-pyrenyl group, 9-methanoyl-2-pyrenyl group, 9-carbamoyl-2-pyrenyl group, 9-cyano-2-pyrenyl group, 10-methoxy-2-pyrenyl group, 10-methanoyl-2-pyrenyl group, 10-carbamoyl-2-pyrenyl group, 10-cyano-2-pyrenyl group and the like.

In a first aspect of the present invention, examples of polyaminopyridines include poly(2-(N-phenyl)aminopyridine), poly(2-(N-phenyl)amino-4-methylpyridine), poly(2-(N-phenyl)amino-4-ethylpyridine), poly(2-(N-phenyl)amino-4-n-propylpyridine), poly(2-(N-phenyl)amino-4-n-butylpyridine), poly(2-(N-phenyl)amino-4-n-hexylpyridine), poly(2-(N-phenyl)amino-4-n-octylpyridine), poly(2-(N-phenyl)amino-4-n-decylpyridine), poly(2-(N-2-pyridyl)aminopyridine), poly(2-(N-2-pyridyl)amino-4-methylpyridine), poly(2-(N-2-pyridyl)amino-4-n-hexylpyridine), poly(2-(N-3-pyridyl)aminopyridine), poly(2-(N-3-pyridyl)amino-4-methylpyridine), poly(2-(N-3-pyridyl)amino-4-n-hexylpyridine), poly(2-(N-4-pyridyl)aminopyridine), poly(2-(N-4-pyridyl)amino-4-methylpyridine), poly(2-(N-4-pyridyl)amino-4-n-hexylpyridine), poly(2-(N-3-methyl-2-pyridyl)aminopyridine), poly(2-(N-2-methyl-3-pyridyl)aminopyridine), poly(2-(N-3-methyl-4-pyridyl)aminopyridine) and the like.

In a second aspect of the present invention, examples of polyaminopyridines include poly(2-(N-2-pyrimidyl)aminopyridine), poly(2-(N-2-pyrimidyl)amino-4-methylpyridine), poly(2-(N-2-pyrimidyl)amino-4-ethylpyridine), poly(2-(N-2-pyrimidyl)amino-4-n-propylpyridine), poly(2-(N-2-pyrimidyl)amino-4-n-butylpyridine), poly(2-(N-2-pyrimidyl)amino-4-n-hexylpyridine), poly(2-(N-2-pyrimidyl)amino-4-n-octylpyridine), poly(2-(N-2-pyrimidyl)amino-4-n-decylpyridine), poly(2-(N-1-naphthyl)aminopyridine), poly(2-(N-1-naphthyl)amino-4-methylpyridine), poly(2-(N-1-naphthyl)amino-4-n-hexylpyridine), poly(2-(N-2-naphthyl)aminopyridine), poly(2-(N-2-naphthyl)amino-4-methylpyridine), poly(2-(N-2-naphthyl)amino-4-n-hexylpyridine), poly(2-(N-3-naphthyl)aminopyridine), poly(2-(N-2-quinolyl)aminopyridine), poly(2-(N-2-quinolyl)amino-4-methylpyridine), poly(2-(N-2-quinolyl)amino-4-n-hexylpyridine), poly(2-(N-3-quinolyl)aminopyridine), poly(2-(N-3-quinolyl)amino-4-methylpyridine), poly(2-(N-3-quinolyl)amino-4-n-hexylpyridine), poly(2-(N-4-quinolyl)aminopyridine), poly(2-(N-5-methyl-2-pyrimidyl)aminopyridine), poly(2-(N-3-methyl-1-naphthyl)aminopyridine), poly(2-(N-2-methyl-3-quinolyl)aminopyridine) and the like.

In a third aspect of the present invention, examples of polyaminopyridines include poly(2-(N-1-anthryl)aminopyridine), poly(2-(N-1-anthryl)amino-4-methylpyridine), poly(2-(N-1-anthryl)amino-4-ethylpyridine), poly(2-(N-1-anthryl)amino-4-n-propylpyridine), poly(2-(N-1-anthryl)amino-4-n-butylpyridine), poly(2-(N-1-anthryl)amino-4-n-hexylpyridine), poly(2-(N-1-anthryl)amino-4-n-octylpyridine), poly(2-(N-1-anthryl)amino-4-n-decylpyridine), poly(2-(N-2-anthryl)aminopyridine), poly(2-(N-2-anthryl)amino-4-methylpyridine), poly(2-(N-2-anthryl)amino-4-ethylpyridine), poly(2-(N-2-anthryl)amino-4-n-propylpyridine), poly(2-(N-2-anthryl)amino-4-n-butylpyridine), poly(2-(N-2-anthryl)amino-4-n-hexylpyridine), poly(2-(N-2-anthryl)amino-4-n-octylpyridine), poly(2-(N-2-anthryl)amino-4-n-decylpyridine), poly(2-(N-9-anthryl)aminopyridine), poly(2-(N-9-anthryl)amino-4-methylpyridine), poly(2-(N-9-anthryl)amino-4-ethylpyridine), poly(2-(N-9-anthryl)amino-4-n-propylpyridine), poly(2-(N-9-anthryl)amino-4-n-butylpyridine), poly(2-(N-9-anthryl)amino-4-n-hexylpyridine), poly(2-(N-9-anthryl)amino-4-n-octylpyridine), poly(2-(N-9-anthryl)amino-4-n-decylpyridine), poly(2-(N-1-pyrenyl)aminopyridine), poly(2-(N-1-pyrenyl)amino-4-methylpyridine), poly(2-(N-1-pyrenyl)amino-4-ethylpyridine), poly(2-(N-1-pyrenyl)amino-4-n-propylpyridine), poly(2-(N-1-pyrenyl)amino-4-n-butylpyridine), poly(2-(N-1-pyrenyl)amino-4-n-hexylpyridine), poly(2-(N-1-pyrenyl)amino-4-n-octylpyridine), poly(2-(N-1-pyrenyl)amino-4-n-decylpyridine), poly(2-(N-2-pyrenyl)aminopyridine), poly(2-(N-2-pyrenyl)amino-4-methylpyridine), poly(2-(N-2-pyrenyl)amino-4-ethylpyridine), poly(2-(N-2-pyrenyl)amino-4-n-propylpyridine), poly(2-(N-2-pyrenyl)amino-4-n-butylpyridine), poly(2-(N-2-pyrenyl)amino-4-n-hexylpyridine), poly(2-(N-2-pyrenyl)amino-4-n-octylpyridine), poly(2-(N-2-pyrenyl)amino-4-n-decylpyridine), poly(2-(N-2-methyl-1-anthryl)aminopyridine), poly(2-(N-3-methyl-1-anthryl)aminopyridine), poly(2-(N-4-methyl-1-anthryl)aminopyridine), poly(2-(N-1-methyl-2-anthryl)aminopyridine), poly(2-(N-3-methyl-2-anthryl)aminopyridine), poly(2-(N-4-methyl-2-anthryl)aminopyridine), poly(2-(N-1-methyl-9-anthryl)aminopyridine), poly(2-(N-2-methyl-9-anthryl)aminopyridine), poly(2-(N-3-methyl-9-anthryl)aminopyridine), poly(2-(N-4-methyl-9-anthryl)aminopyridine), poly(2-(N-2-methyl-1-pyrenyl)aminopyridine), poly(2-(N-3-methyl-1-pyrenyl)aminopyridine), poly(2-(N-4-methyl-1-pyrenyl)aminopyridine), poly(2-(N-5-methyl-1-pyrenyl)aminopyridine), poly(2-(N-1-methyl-2-pyrenyl)aminopyridine), poly(2-(N-3-methyl-2-pyrenyl)aminopyridine), poly(2-(N-4-methyl-2-pyrenyl)aminopyridine), poly(2-(N-5-methyl-2-pyrenyl)aminopyridine), poly(2-(N-2-methoxy-1-anthryl)aminopyridine), poly(2-(N-3-ethoxy-1-anthryl)aminopyridine), poly(2-(N-4-methanoyl-1-anthryl)aminopyridine), poly(2-(N-1-ethanoyl-2-anthryl)aminopyridine), poly(2-(N-3-carbamoyl-2-anthryl)aminopyridine), poly(2-(N-4-cyano-2-anthryl)aminopyridine), poly(2-(N-1-methoxy-9-anthryl)aminopyridine), poly(2-(N-2-ethoxy-9-anthryl)aminopyridine), poly(2-(N-3-methanoyl-9-anthryl)aminopyridine), poly(2-(N-4-ethanoyl-9-anthryl)aminopyridine), poly(2-(N-2-carbamoyl-1-pyrenyl)aminopyridine), poly(2-(N-3-cyano-1-pyrenyl)aminopyridine), poly(2-(N-4-methoxy-1-pyrenyl)aminopyridine), poly(2-(N-5-ethoxy-1-pyrenyl)aminopyridine), poly(2-(N-1-methanoyl-2-pyrenyl)aminopyridine), poly(2-(N-3-ethanoyl-2-pyrenyl)aminopyridine), poly(2-(N-4-carbamoyl-2-pyrenyl)aminopyridine), poly(2-(N-5-cyano-2-pyrenyl)aminopyridine) and the like.

A number average molecular weight of polyaminopyridines of the present invention is 500 to 1000000, preferably 1000 to 100000. When a number average molecular weight of polyaminopyridines is less than 500, there is a possibility that film forming property is deteriorated upon coating or casting of the resulting solution. On the other hand, when a number average molecular weight exceeds 1000000, there is a possibility that solubility in a solvent is deteriorated.

Examples of a process for preparing polyaminopyridines of the present invention include a process of reacting 2,6-dihalogenopyridines and an aromatic amine compound using a palladium compound and a phosphine compound as a catalyst in the presence of a base. Alternatively, the palladium compound and the phosphine compound may be used in the reaction as a mixed catalyst containing them.

The 2,6-dihalogenopyridines are a compound represented by the general formula (2). In the general formula (2), R¹ is as defined in the general formula (1). And, X represents a halogen atom.
Examples of the halogen atom include a fluorine atom, a chlorine atom, a bromine atom, an iodine atom and the like.

Examples of 2,6-dihalogenopyridines represented by the general formula (2) include 2,6-difluoropyridine, 2,6-dichloropyridine, 2,6-dibromopyridine, 2,6-diiodopyridine, 3-methyl-2,6-dichloropyridine, 4-methyl-2,6-dichloropyridine, 5-methyl-2,6-dichloropyridine, 3-ethyl-2,6-dichloropyridine, 4-ethyl-2,6-dichloropyridine, 5-ethyl-2,6-dichloropyridine, 3-isopropyl-2,6-dichloropyridine, 4-isopropyl-2,6-dichloropyridine, 5-isopropyl-2,6-dichloropyridine, 3-n-propyl-2,6-dichloropyridine, 4-n-propyl-2,6-dichloropyridine, 5-n-propyl-2,6-dichloropyridine, 3-n-butyl-2,6-dichloropyridine, 4-n-butyl-2,6-dichloropyridine, 5-n-butyl-2,6-dichloropyridine, 3-sec-butyl-2,6-dichloropyridine, 4-sec-butyl-2,6-dichloropyridine, 5-sec-butyl-2,6-dichloropyridine, 3-tert-butyl-2,6-dichloropyridine, 4-tert-butyl-2,6-dichloropyridine, 5-tert-butyl-2,6-dichloropyridine, 3-n-pentyl-2,6-dichloropyridine, 4-n-pentyl-2,6-dichloropyridine, 5-n-pentyl-2,6-dichloropyridine, 3-isopentyl-2,6-dichloropyridine, 4-isopentyl-2,6-dichloropyridine, 5-isopentyl-2,6-dichloropyridine, 3-neopentyl-2,6-dichloropyridine, 4-neopentyl-2,6-dichloropyridine, 5-neopentyl-2,6-dichloropyridine, 3-n-hexyl-2,6-dichloropyridine, 4-n-hexyl-2,6-dichloropyridine, 5-n-hexyl-2,6-dichloropyridine, 3-isohexyl-2,6-dichloropyridine, 4-isohexyl-2,6-dichloropyridine, 5-isohexyl-2,6-dichloropyridine, 3-n-octyl-2,6-dichloropyridine, 4-n-octyl-2,6-dichloropyridine, 5-n-octyl-2,6-dichloropyridine, 3-n-decyl-2,6-dichloropyridine, 4-n-decyl-2,6-dichloropyridine, 5-n-decyl-2,6-dichloropyridine, 4-cyano-2,6-dichloropyridine, 4-methoxy-2,6-dichloropyridine and the like. Inter alia, from a viewpoint of easy availability and economy, 2,6-dichloropyridine and 2,6-dibromopyridine are preferably used.

On the other hand, the aromatic amine compound is a compound represented by the general formula (3). In the general formula (3), R² is as defined in the general formula (1).

In a first aspect of the present invention, examples of the aromatic amine compound represented by the general formula (3) include aniline, 2-methylaniline, 2-ethylaniline, 2-n-hexylaniline, 2-n-octylaniline, 2-n-decylaniline, 4-methylaniline, 4-ethylaniline, 4-n-hexylaniline, 4-n-octylaniline, 4-n-decylaniline, 2-methoxyaniline, 2-methanoylaniline, 2-carbamoylaniline, 2-cyanoaniline, 4-methoxyaniline, 4-methanoylaniline, 4-carbamoylaniline, 4-cyanoaniline, 2-aminopyridine, 3-aminopyridine, 4-aminopyridine, 4-methyl-2-aminopyridine, 4-ethyl-2-aminopyridine, 4-n-hexyl-2-aminopyridine, 4-n-octyl-2-aminopyridine, 4-n-decyl-2-aminopyridine, 6-methyl-2-aminopyridine, 6-ethyl-2-aminopyridine, 6-n-hexyl-2-aminopyridine, 6-n-octyl-2-aminopyridine, 6-n-decyl-2-aminopyridine, 2-methyl-3-aminopyridine, 2-ethyl-3-aminopyridine, 2-n-hexyl-3-aminopyridine, 2-n-octyl-3-aminopyridine, 2-n-decyl-3-aminopyridine, 4-methyl-3-aminopyridine, 4-ethyl-3-aminopyridine, 4-n-hexyl-3-aminopyridine, 4-n-octyl-3-aminopyridine, 4-n-decyl-3-aminopyridine, 6-methyl-3-aminopyridine, 6-ethyl-3-aminopyridine, 6-n-hexyl-3-aminopyridine, 6-n-octyl-3-aminopyridine, 6-n-decyl-3-aminopyridine, 2-methyl-4-aminopyridine, 2-ethyl-4-aminopyridine, 2-n-hexyl-4-aminopyridine, 2-n-octyl-4-aminopyridine, 2-n-decyl-4-aminopyridine, 6-methyl-4-aminopyridine, 6-ethyl-4-aminopyridine, 6-n-hexyl-4-aminopyridine, 6-n-octyl-4-aminopyridine, 6-n-decyl-4-aminopyridine, 4-methoxy-2-aminopyridine, 4-methanoyl-2-aminopyridine, 4-carbamoyl-2-aminopyridine, 2-cyano-2-aminopyridine, 6-methoxy-2-aminopyridine, 6-methanoyl-2-aminopyridine, 6-carbamoyl-2-aminopyridine, 6-cyano-2-aminopyridine, 2-methoxy-3-aminopyridine, 2-methanoyl-3-aminopyridine, 2-carbamoyl-3-aminopyridine, 2-cyano-3-aminopyridine, 4-methoxy-3-aminopyridine, 4-methanoyl-3-aminopyridine, 4-carbamoyl-3-aminopyridine, 4-cyano-3-aminopyridine, 6-methoxy-3-aminopyridine, 6-methanoyl-3-aminopyridine, 6-carbamoyl-3-aminopyridine, 6-cyano-3-aminopyridine, 2-methoxy-4-aminopyridine, 2-methanoyl-4-aminopyridine, 2-carbamoyl-4-aminopyridine, 2-cyano-4-aminopyridine, 6-methoxy-4-aminopyridine, 6-methanoyl-4-aminopyridine, 6-carbamoyl-4-aminopyridine, 6-cyano-4-aminopyridine and the like. Inter alia, from a viewpoint of easy availability and economy, aniline, 2-aminopyridine, 3-aminopyridine, and 4-aminopyridine are preferably used.

In a second aspect of the present invention, examples of the aromatic amine compound represented by the general formula (3) include 2-aminopyrimidine, 4-aminopyrimidine, 5-aminopyrimidine, 4-methyl-2-aminopyrimidine, 4-ethyl-2-aminopyrimidine, 4-n-hexyl-2-aminopyrimidine, 4-n-octyl-2-aminopyrimidine, 4-n-decyl-2-aminopyrimidine, 5-methyl-2-aminopyrimidine, 5-ethyl-2-aminopyrimidine, 5-n-hexyl-2-aminopyrimidine, 5-n-octyl-2-aminopyrimidine, 5-n-decyl-2-aminopyrimidine, 4-methoxy-2-aminopyrimidine, 4-methanoyl-2-aminopyrimidine, 4-carbamoyl-2-aminopyrimidine, 4-cyano-2-aminopyrimidine, 5-methoxy-2-aminopyrimidine, 5-methanoyl-2-aminopyrimidine, 5-carbamoyl-2-aminopyrimidine, 5-cyano-2-aminopyrimidine, 1-aminonaphthalene, 2-aminonaphthalene, 2-methyl-1-aminonaphthalene, 2-ethyl-1-aminonaphthalene, 2-n-hexyl-1-aminonaphthalene, 2-n-octyl-1-aminonaphthalene, 2-n-decyl-1-aminonaphthalene, 3-methyl-1-aminonaphthalene, 3-ethyl-1-aminonaphthalene, 3-n-hexyl-1-aminonaphthalene, 3-n-octyl-1-aminonaphthalene, 3-n-decyl-1-aminonaphthalene, 4-methyl-1-aminonaphthalene, 4-ethyl-1-aminonaphthalene, 4-n-hexyl-1-aminonaphthalene, 4-n-octyl-1-aminonaphthalene, 4-n-decyl-1-aminonaphthalene, 5-methyl-1-aminonaphthalene, 5-ethyl-1-aminonaphthalene, 5-n-hexyl-1-aminonaphthalene, 5-n-octyl-1-aminonaphthalene, 5-n-decyl-1-aminonaphthalene, 6-methyl-1-aminonaphthalene, 6-ethyl-1-aminonaphthalene, 6-n-hexyl-1-aminonaphthalene, 6-n-octyl-1-aminonaphthalene, 6-n-decyl-1-aminonaphthalene, 7-methyl-1-aminonaphthalene, 7-ethyl-1-aminonaphthalene, 7-n-hexyl-1-aminonaphthalene, 7-n-octyl-1-aminonaphthalene, 7-n-decyl-1-aminonaphthalene, 8-methyl-1-aminonaphthalene, 8-ethyl-1-aminonaphthalene, 8-n-hexyl-1-aminonaphthalene, 8-n-octyl-1-aminonaphthalene, 8-n-decyl-1-aminonaphthalene, 4-methoxy-1-aminonaphthalene, 4-methanoyl-1-aminonaphthalene, 4-carbamoyl-1-aminonaphthalene, 4-cyano-1-aminonaphthalene, 2-amino-1-quinoline, 3-amino-1-quinoline, 4-amino-1-quinoline, 5-amino-1-quinoline, 6-amino-1-quinoline, 7-amino-1-quinoline, 8-amino-1-quinoline, 2-amino-3-methyl-1-quinoline, 2-amino-3-ethyl-1-quinoline, 2-amino-3-n-hexyl-1-quinoline, 2-amino-3-n-octyl-1-quinoline, 2-amino-3-n-decyl-1-quinoline and the like. Inter alia, from a viewpoint of easy availability and economy, 2-aminopyrimidine, 1-naphthylamine and 3-aminoquinoline are preferably used.

In a third aspect of the present invention, examples of the aromatic amine compound represented by the general formula (3) include 1-aminoanthracene, 2-aminoanthracene, 9-aminoanthracene, 2-methyl-1-aminoanthracene, 2-ethyl-1-aminoanthracene, 2-n-hexyl-1-aminoanthracene, 2-n-octyl-1-aminoanthracene, 2-n-decyl-1-aminoanthracene, 3-methyl-1-aminoanthracene, 3-ethyl-1-aminoanthracene, 3-n-hexyl-1-aminoanthracene, 3-n-octyl-1-aminoanthracene, 3-n-decyl-1-aminoanthracene, 4-methyl-1-aminoanthracene, 4-ethyl-1-aminoanthracene, 4-n-hexyl-1-aminoanthracene, 4-n-octyl-1-aminoanthracene, 4-n-decyl-1-aminoanthracene, 5-methyl-1-aminoanthracene, 5-ethyl-1-aminoanthracene, 5-n-hexyl-1-aminoanthracene, 5-n-octyl-1-aminoanthracene, 5-n-decyl-1-aminoanthracene, 6-methyl-1-aminoanthracene, 6-ethyl-1-aminoanthracene, 6-n-hexyl-1-aminoanthracene, 6-n-octyl-1-aminoanthracene, 6-n-decyl-1-aminoanthracene, 7-methyl-1-aminoanthracene, 7-ethyl-1-aminoanthracene, 7-n-hexyl-1-aminoanthracene, 7-n-octyl-1-aminoanthracene, 7-n-decyl-1-aminoanthracene, 8-methyl-1-aminoanthracene, 8-ethyl-1-aminoanthracene, 8-n-hexyl-1-aminoanthracene, 8-n-octyl-1-aminoanthracene, 8-n-decyl-1-aminoanthracene, 9-methyl-1-aminoanthracene, 9-ethyl-1-aminoanthracene, 9-n-hexyl-1-aminoanthracene, 9-n-octyl-1-aminoanthracene, 9-n-decyl-1-aminoanthracene, 10-methyl-1-aminoanthracene, 10-ethyl-1-aminoanthracene, 10-n-hexyl-1-aminoanthracene, 10-n-octyl-1-aminoanthracene, 10-n-decyl-1-aminoanthracene, 1-methyl-2-aminoanthracene, 1-ethyl-2-aminoanthracene, 1-n-hexyl-2-aminoanthracene, 1-n-octyl-2-aminoanthracene, 1-n-decyl-2-aminoanthracene, 3-methyl-2-aminoanthracene, 3-ethyl-2-aminoanthracene, 3-n-hexyl-2-aminoanthracene, 3-n-octyl-2-aminoanthracene, 3-n-decyl-2-aminoanthracene, 4-methyl-2-aminoanthracene, 4-ethyl-2-aminoanthracene, 4-n-hexyl-2-aminoanthracene, 4-n-octyl-2-aminoanthracene, 4-n-decyl-2-aminoanthracene, 5-methyl-2-aminoanthracene, 5-ethyl-2-aminoanthracene, 5-n-hexyl-2-aminoanthracene, 5-n-octyl-2-aminoanthracene, 5-n-decyl-2-aminoanthracene, 6-methyl-2-aminoanthracene, 6-ethyl-2-aminoanthracene, 6-n-hexyl-2-aminoanthracene, 6-n-octyl-2-aminoanthracene, 6-n-decyl-2-aminoanthracene, 7-methyl-2-aminoanthracene, 7-ethyl-2-aminoanthracene, 7-n-hexyl-2-aminoanthracene, 7-n-octyl-2-aminoanthracene, 7-n-decyl-2-aminoanthracene, 8-methyl-2-aminoanthracene, 8-ethyl-2-aminoanthracene, 8-n-hexyl-2-aminoanthracene, 8-n-octyl-2-aminoanthracene, 8-n-decyl-2-aminoanthracene, 9-methyl-2-aminoanthracene, 9-ethyl-2-aminoanthracene, 9-n-hexyl-2-aminoanthracene, 9-n-octyl-2-aminoanthracene, 9-n-decyl-2-aminoanthracene, 10-methyl-2-aminoanthracene, 10-ethyl-2-aminoanthracene, 10-n-hexyl-2-aminoanthracene, 10-n-octyl-2-aminoanthracene, 10-n-decyl-2-aminoanthracene, 1-methyl-9-aminoanthracene, 1-ethyl-9-aminoanthracene, 1-n-hexyl-9-aminoanthracene, 1-n-octyl-9-aminoanthracene, 1-n-decyl-9-aminoanthracene, 2-methyl-9-aminoanthracene, 2-ethyl-9-aminoanthracene, 2-n-hexyl-9-aminoanthracene, 2-n-octyl-9-aminoanthracene, 2-n-decyl-9-aminoanthracene, 3-methyl-9-aminoanthracene, 3-ethyl-9-aminoanthracene, 3-n-hexyl-9-aminoanthracene, 3-n-octyl-9-aminoanthracene, 3-n-decyl-9-aminoanthracene, 4-methyl-9-aminoanthracene, 4-ethyl-9-aminoanthracene, 4-n-hexyl-9-aminoanthracene, 4-n-octyl-9-aminoanthracene, 4-n-decyl-9-aminoanthracene, 10-methyl-9-aminoanthracene, 10-ethyl-9-aminoanthracene, 10-n-hexyl-9-aminoanthracene, 10-n-octyl-9-aminoanthracene, 10-n-decyl-9-aminoanthracene, 2-methoxy-1-aminoanthracene, 2-methanoyl-1-aminoanthracene, 2-carbamoyl-1-aminoanthracene, 2-cyano-1-aminoanthracene, 3-methoxy-1-aminoanthracene, 3-methanoyl-1-aminoanthracene, 3-carbamoyl-1-aminoanthracene, 3-cyano-1-aminoanthracene, 4-methoxy-1-aminoanthracene, 4-methanoyl-1-aminoanthracene, 4-carbamoyl-1-aminoanthracene, 4-cyano-1-aminoanthracene, 5-methoxy-1-aminoanthracene, 5-methanoyl-1-aminoanthracene, 5-carbamoyl-1-aminoanthracene, 5-cyano-1-aminoanthracene, 6-methoxy-1-aminoanthracene, 6-methanoyl-1-aminoanthracene, 6-carbamoyl-1-aminoanthracene, 6-cyano-1-aminoanthracene, 7-methoxy-1-aminoanthracene, 7-methanoyl-1-aminoanthracene, 7-carbamoyl-1-aminoanthracene, 7-cyano-1-aminoanthracene, 8-methoxy-1-aminoanthracene, 8-methanoyl-1-aminoanthracene, 8-carbamoyl-1-aminoanthracene, 8-cyano-1-aminoanthracene, 9-methoxy-1-aminoanthracene, 9-methanoyl-1-aminoanthracene, 9-carbamoyl-1-aminoanthracene, 9-cyano-1-aminoanthracene, 10-methoxy-1-aminoanthracene, 10-methanoyl-1-aminoanthracene, 10-carbamoyl-1-aminoanthracene, 10-cyano-1-aminoanthracene, 1-methoxy-2-aminoanthracene, 1-methanoyl-2-aminoanthracene, 1-carbamoyl-2-aminoanthracene, 1-cyano-2-aminoanthracene, 3-methoxy-2-aminoanthracene, 3-methanoyl-2-aminoanthracene, 3-carbamoyl-2-aminoanthracene, 3-cyano-2-aminoanthracene, 4-methoxy-2-aminoanthracene, 4-methanoyl-2-aminoanthracene, 4-carbamoyl-2-aminoanthracene, 4-cyano-2-aminoanthracene, 5-methoxy-2-aminoanthracene, 5-methanoyl-2-aminoanthracene, 5-carbamoyl-2-aminoanthracene, 5-cyano-2-aminoanthracene, 6-methoxy-2-aminoanthracene, 6-methanoyl-2-aminoanthracene, 6-carbamoyl-2-aminoanthracene, 6-cyano-2-aminoanthracene, 7-methoxy-2-aminoanthracene, 7-methanoyl-2-aminoanthracene, 7-carbamoyl-2-aminoanthracene, 7-cyano-2-aminoanthracene, 8-methoxy-2-aminoanthracene, 8-methanoyl-2-aminoanthracene, 8-carbamoyl-2-aminoanthracene, 8-cyano-2-aminoanthracene, 9-methoxy-2-aminoanthracene, 9-methanoyl-2-aminoanthracene, 9-carbamoyl-2-aminoanthracene, 9-cyano-2-aminoanthracene, 10-methoxy-2-aminoanthracene, 10-methanoyl-2-aminoanthracene, 10-carbamoyl-2-aminoanthracene, 10-cyano-2-aminoanthracene, 1-methoxy-9-aminoanthracene, 1-methanoyl-9-aminoanthracene, 1-carbamoyl-9-aminoanthracene, 1-cyano-9-aminoanthracene, 2-methoxy-9-aminoanthracene, 2-methanoyl-9-aminoanthracene, 2-carbamoyl-9-aminoanthracene, 2-cyano-9-aminoanthracene, 3-methoxy-9-aminoanthracene, 3-methanoyl-9-aminoanthracene, 3-carbamoyl-9-aminoanthracene, 3-cyano-9-aminoanthracene, 4-methoxy-9-aminoanthracene, 4-methanoyl-9-aminoanthracene, 4-carbamoyl-9-aminoanthracene, 4-cyano-9-aminoanthracene, 10-methoxy-9-aminoanthracene, 10-methanoyl-9-aminoanthracene, 10-carbamoyl-9-aminoanthracene, 10-cyano-9-aminoanthracene, 1-aminopyrene, 2-aminopyrene, 2-methyl-1-aminopyrene, 2-ethyl-1-aminopyrene, 2-n-hexyl-1-aminopyrene, 2-n-octyl-1-aminopyrene, 2-n-decyl-1-aminopyrene, 3-methyl-1-aminopyrene, 3-ethyl-1-aminopyrene, 3-n-hexyl-1-aminopyrene, 3-n-octyl-1-aminopyrene, 3-n-decyl-1-aminopyrene, 4-methyl-1-aminopyrene, 4-ethyl-1-aminopyrene, 4-n-hexyl-1-aminopyrene, 4-n-octyl-1-aminopyrene, 4-n-decyl-1-aminopyrene, 5-methyl-1-aminopyrene, 5-ethyl-1-aminopyrene, 5-n-hexyl-1-aminopyrene, 5-n-octyl-1-aminopyrene, 5-n-decyl-1-aminopyrene, 6-methyl-1-aminopyrene, 6-ethyl-1-aminopyrene, 6-n-hexyl-1-aminopyrene, 6-n-octyl-1-aminopyrene, 6-n-decyl-1-aminopyrene, 7-methyl-1-aminopyrene, 7-ethyl-1-aminopyrene, 7-n-hexyl-1-aminopyrene, 7-n-octyl-1-aminopyrene, 7-n-decyl-1-aminopyrene, 8-methyl-1-aminopyrene, 8-ethyl-1-aminopyrene, 8-n-hexyl-1-aminopyrene, 8-octyl-1-aminopyrene, 8-n-decyl-1-aminopyrene, 9-methyl-1-aminopyrene, 9-ethyl-1-aminopyrene, 9-n-hexyl-1-aminopyrene, 9-n-octyl-1-aminopyrene, 9-n-decyl-1-aminopyrene, 10-methyl-1-aminopyrene, 10-ethyl-1-aminopyrene, 10-n-hexyl-1-aminopyrene, 10-n-octyl-1-aminopyrene, 10-n-decyl-1-aminopyrene, 1-methyl-2-aminopyrene, 1-ethyl-2-aminopyrene, 1-n-hexyl-2-aminopyrene, 1-n-octyl-2-aminopyrene, 1-n-decyl-2-aminopyrene, 3-methyl-2-aminopyrene, 3-ethyl-2-aminopyrene, 3-n-hexyl-2-aminopyrene, 3-n-octyl-2-aminopyrene, 3-n-decyl-2-aminopyrene, 4-methyl-2-aminopyrene, 4-ethyl-2-aminopyrene, 4-n-hexyl-2-aminopyrene, 4-n-octyl-2-aminopyrene, 4-n-decyl-2-aminopyrene, 5-methyl-2-aminopyrene, 5-ethyl-2-aminopyrene, 5-n-hexyl-2-aminopyrene, 5-n-octyl-2-aminopyrene, 5-n-decyl-2-aminopyrene, 6-methyl-2-aminopyrene, 6-ethyl-2-aminopyrene, 6-n-hexyl-2-aminopyrene, 6-n-octyl-2-aminopyrene, 6-n-decyl-2-aminopyrene, 7-methyl-2-aminopyrene, 7-ethyl-2-aminopyrene, 7-n-hexyl-2-aminopyrene, 7-n-octyl-2-aminopyrene, 7-n-decyl-2-aminopyrene, 8-methyl-2-aminopyrene, 8-ethyl-2-aminopyrene, 8-n-hexyl-2-aminopyrene, 8-octyl-2-aminopyrene, 8-n-decyl-2-aminopyrene, 9-methyl-2-aminopyrene, 9-ethyl-2-aminopyrene, 9-n-hexyl-2-aminopyrene, 9-n-octyl-2-aminopyrene, 9-n-decyl-2-aminopyrene, 10-methyl-2-aminopyrene, 10-ethyl-2-aminopyrene, 10-n-hexyl-2-aminopyrene, 10-n-octyl-2-aminopyrene, 10-n-decyl-2-aminopyrene, 2-methoxy-1-aminopyrene, 2-methanoyl-1-aminopyrene, 2-carbamoyl-1-aminopyrene, 2-cyano-1-aminopyrene, 3-methoxy-1-aminopyrene, 3-methanoyl-1-aminopyrene, 3-carbamoyl-1-aminopyrene, 3-cyano-1-aminopyrene, 4-methoxy-1-aminopyrene, 4-methanoyl-1-aminopyrene, 4-carbamoyl-1-aminopyrene, 4-cyano-1-aminopyrene, 5-methoxy-1-aminopyrene, 5-methanoyl-1-aminopyrene, 5-carbamoyl-1-aminopyrene, 5-cyano-1-aminopyrene, 6-methoxy-1-aminopyrene, 6-methanoyl-1-aminopyrene, 6-carbamoyl-1-aminopyrene, 6-cyano-1-aminopyrene, 7-methoxy-1-aminopyrene, 7-methanoyl-1-aminopyrene, 7-carbamoyl-1-aminopyrene, 7-cyano-1-aminopyrene, 8-methoxy-1-aminopyrene, 8-methanoyl-1-aminopyrene, 8-carbamoyl-1-aminopyrene, 8-cyano-1-aminopyrene, 9-methoxy-1-aminopyrene, 9-methanoyl-1-aminopyrene, 9-carbamoyl-1-aminopyrene, 9-cyano-1-aminopyrene, 10-methoxy-1-aminopyrene, 10-methanoyl-1-aminopyrene, 10-carbamoyl-1-aminopyrene, 10-cyano-1-aminopyrene, 2-methoxy-2-aminopyrene, 2-methanoyl-2-aminopyrene, 2-carbamoyl-2-aminopyrene, 2-cyano-2-aminopyrene, 3-methoxy-2-aminopyrene, 3-methanoyl-2-aminopyrene, 3-carbamoyl-2-aminopyrene, 3-cyano-2-aminopyrene, 4-methoxy-2-aminopyrene, 4-methanoyl-2-aminopyrene, 4-carbamoyl-2-aminopyrene, 4-cyano-2-aminopyrene, 5-methoxy-2-aminopyrene, 5-methanoyl-2-aminopyrene, 5-carbamoyl-2-aminopyrene, 5-cyano-2-aminopyrene, 6-methoxy-2-aminopyrene, 6-methanoyl-2-aminopyrene, 6-carbamoyl-2-aminopyrene, 6-cyano-2-aminopyrene, 7-methoxy-2-aminopyrene, 7-methanoyl-2-aminopyrene, 7-carbamoyl-2-aminopyrene, 7-cyano-2-aminopyrene, 8-methoxy-2-aminopyrene, 8-methanoyl-2-aminopyrene, 8-carbamoyl-2-aminopyrene, 8-cyano-2-aminopyrene, 9-methoxy-2-aminopyrene, 9-methanoyl-2-aminopyrene, 9-carbamoyl-2-aminopyrene, 9-cyano-2-aminopyrene, 10-methoxy-2-aminopyrene, 10-methanoyl-2-aminopyrene, 10-carbamoyl-2-aminopyrene, 10-cyano-2-aminopyrene and the like. Inter alia, from a viewpoint of easy availability and economy, 1-aminoanthracene, 2-aminoanthracene, 1-aminopyrene, and 2-aminopyrene are preferably used.

It is desirable that an amount of the aromatic amine compound to be used is 0.5 to 1.5 mole, preferably 0.9 to 1.1 mole per 1 mole of 2,6-dihalogenopyridines. When an amount of the aromatic amine compound to be used is less than 0.5 moles, there is a possibility that a reaction becomes difficult to proceed. On the other hand, when an amount of the aromatic amine compound to be used exceeds 1.5 moles, the effect corresponding to a use amount is not exerted, and this is not economical.

And, examples of the palladium compound used in the present invention include a tetravalent palladium compound such as sodium hexachloropalladate (IV) tetrahydrate, potassium hexachloropalladate (IV) and the like; a divalent palladium compound such as palladium (II) chloride, palladium (II) bromide, palladium (II) acetate, palladium acetylacetonate (II), dichlorobis(benzonitrile)palladium (II), dichlorobis(acetonitrile)palladium (II), dichlorobis(triphenylphosphine)palladium (II), dichlorobis(tri-o-tolylphosphine)palladium (II), dichlorotetraaminepalladium (II), dichloro(cyclooctane-1,5-diene)palladium (II), palladium trifluoroacetate (II) and the like; a zerovalent palladium compound such as tris(dibenzylideneacetone)dipalladium (0), tris(dibenzylideneacetone)dipalladium chloroform complex(0), tetrakis(triphenylphosphine)palladium (0) and the like. Among them, from a viewpoint of high reaction activity, a zerovalent palladium compound is preferable. Inter alia, tris(dibenzylideneacetone)dipalladium (0) has highest reaction activity, and is preferably used.

It is desirable that an amount of the palladium compound to be used is 0.01 to 20 mol%, preferably 0.02 to 5 mol% per 2,6-dihalogenopyridines in terms of palladium. When an amount of the palladium compound to be used is less than 0.01 mol%, there is a possibility the reaction becomes difficult to proceed. And, when an amount of the palladium compound to be used exceeds 20 mol%, the effect corresponding to a use amount is not exerted and this is not economical.

On the other hand, examples of the phosphine compound used in the present invention include a phosphine compound having the chelating ability as a bidentate ligand such as 2,2'-bis(diphenylphosphino)-1,1'-binaphthyl, 1,1'-bis(diphenylphosphino)ferrocene, N,N'-dimethyl-1-[1',2-bis(diphenylphosphino)ferrocenyl] and the like. Inter alia, from a viewpoint of high reaction activity, 2,2'-bis(diphenylphosphino)-1,1'-binaphthyl is preferably used.

It is desirable that an amount of the phosphine compound to be used is 0.1 to 10 moles, preferably 0.5 to 5 moles per mole of the palladium compound. When an amount of the phosphine compound to be used is less than 0.1 moles, there is a possibility that the reaction becomes difficult to proceed. And, when an amount of the phosphine compound to be used exceeds 10 moles, the effect corresponding to a use amount is not exerted, and this is not economical.

The palladium compound and the phosphine compound may be added alone to the reaction system, or may be added as a mixed catalyst by preparing into a complex in advance.

Examples of the base used in the present invention include alkali metal alkoxide such as sodium methoxide, sodium ethoxide, potassium methoxide, potassium ethoxide, lithium-tert-butoxide, sodium-tert-butoxide, potassium-tert-butoxide and the like. These bases may be prepared from an alkali metal, alkali metal hydride and alkali metal hydroxide and an alcohol and may be added to the reaction system.

It is desirable that an amount of the base to be used is 2 mole or more, preferably 2 to 10 mole per 1 mole of 2,6-dihalogenopyridines. When an amount of the base to be used is less than 2 moles, there is a possibility that a yield is reduced.

In the present invention, the reaction is performed in an inert solvent. Examples of the inert solvent include aromatic hydrocarbon solvents such as benzene, toluene, xylene and the like; ether solvents such as diethyl ether, tetrahydrofuran, dioxane and the like; acetonitrile, dimethylformamide, dimethylsulfoxide, hexamethylphosphotriamide and the like. Inter alia, since recycling of a solvent is easy, aromatic hydrocarbon solvents such as benzene, toluene, xylene and the like are preferably used.

It is desirable that a reaction temperature is 20 to 250 °C, preferably 50 to 150 °C. When a reaction temperature is lower than 20 °C, there is a possibility that the reaction takes a long time. On the other hand, when a reaction temperature is higher than 250 °C, there is a possibility that a side reaction occurs, and a yield is reduced. A reaction time is different depending on a reaction temperature, and is usually 1 to 20 hours.

The thus obtained polyaminopyridines can be isolated, for example, by adding a mixed solvent of aqueous ammonia/methanol or the like to precipitate polyaminopyridines, filtering and washing them to remove a catalyst and the like, and drying this.

### Example

The present invention will be specifically explained below by way of Examples, but the present invention is not limited to these Examples. A number average molecular weight of polyaminopyridines obtained in Examples was measured at 30 °C in N,N-dimethylformamide containing LiBr (0.01 mol/L) using gel permeation chromatography (Tosoh Corporation, trade name; HLC-8020), and was calculated based on standard polystyrene.

### Example 1

A four-necked flask, of a volume of 1 L, equipped with a condenser and a thermometer was charged with 12.83 g (86.7 mmol) of 2,6-dichloropyridine, 8.06 g (86.7 mmol) of aniline, 1.98 g (2.16 mmol) of tris(dibenzylideneacetone)dipalladium (0), 4.05 g (6.50 mmol) of 2,2'-bis(diphenylphosphino)-1,1'-binaphthyl, 25.00 g (260.1 mmol) of sodium-tert-butoxide and 800 mL of toluene. Then, a temperature was raised to 100 °C under the nitrogen atmosphere, and the mixture was reacted at 100 °C for 8 hours. After completion of the reaction, the reaction solution was cooled to room temperature, the reaction solution was added to 2 L of a mixed solvent of 28 wt% aqueous ammonia/methanol (volume ratio 1/4), and precipitates were filtered to obtain crude poly(2-(N-phenyl)aminopyridine). The resulting crude poly(2-(N-phenyl)aminopyridine) was washed with 0.5 L of a mixed solvent of 28 wt% aqueous ammonia/methanol (volume ratio 1/4), further washed with methanol, and dried under reduced pressure to obtain 14.49 g of poly(2-(N-phenyl)aminopyridine) as a brown powder (yield 99.5 %). A number average molecular weight of the resulting poly(2-(N-phenyl)aminopyridine) was 4500.

The resulting poly(2-N-phenyl)aminopyridine) had the following physical properties, and could be identified therefrom.
IR (KBr): 3058, 1568, 1494, 1415, 1351, 1261, 1157, 1072, 778, 730, 695 (cm⁻¹)
Elementary analysis (wt%)
Theoretical value C: 77.9 H: 4.8 N:16.5 Cl:0.8
Measured value C:78.6 H:4.7 N:16.0 Cl:0.7

### Example 2

According to the same manner as that of Example 1 except that an amount of tris(dibenzylideneacetone)dipalladium (0) was changed to 0.99 g (1.08 mmol), and an amount of 2,2'-bis(diphenylphosphino)-1,1'-binaphthyl was changed to 2.03 g (3.25 mmol) in Example 1, 12.65 g of poly(2-(N-phenyl)aminopyridine) was obtained (yield 86.9 %). A number average molecular weight of the resulting poly(2-(N-phenyl)aminopyridine) was 5500.

### Example 3

According to the same manner as that of Example 1 except that 20.55 g (86.7 mmol) of 2,6-dibromopyridine was used in place of 12.83 g (86.7 mmol) of 2,6-dichloropyridine in Example 1, 14.56 g of poly(2-(N-phenyl)aminopyridine) was obtained (yield 100 %). A number average molecular weight of the resulting poly(2-(N-phenyl)aminopyridine) was 6500.

### Example 4

A four-necked flask, of a volume of 1 L, equipped with a condenser and a thermometer was charged with 12.83 g (86.7 mmol) of 2,6-dichloropyridine, 8.16 g (86.7 mmol) of 2-aminopyridine, 1.98 g (2.16 mmol) of tris(dibenzylideneacetone)dipalladium (0), 4.05 g (6.50 mmol) of 2,2'-bis(diphenylphosphino)-1,1'-binaphthyl, 25.00 g (260.1 mmol) of sodium-tert-butoxide and 800 mL of toluene. Then, a temperature was raised to 100 °C under the nitrogen atmosphere, and the mixture was reacted at 100 °C for 8 hours. After completion of the reaction, the reaction solution was cooled to room temperature, the reaction solution was added to 2 L of a mixed solvent of 28 wt% aqueous ammonia/methanol (volume ratio 1/4), and precipitates were filtered to obtain crude poly(2-(N-2-pyridyl)aminopyridine). The resulting crude poly(2-(N-2-pyridyl)aminopyridine) was washed with 0.5 L of a mixed solvent of 28 wt% aqueous ammonia/methanol (volume ratio 1/4), further washed with methanol and dried under reduced pressure to obtain 13.25 g of poly(2-(N-2-pyridyl)aminopyridine) as a brown powder (yield 90.4 %). A number average molecular weight of the resulting poly(2-(N-2-pyridyl)aminopyridine) was 3500.

The resulting poly(2-(N-2-pyridyl)aminopyridine) had the following physical properties, and could be identified therefrom.
IR (KBr):1645, 1597, 1557, 1434, 865, 701 (cm⁻¹)
Elementary analysis (wt%)
Theoretical value C:70.3 H:4.1 N:24.6 C1:1.0
Measured value C:71.0 H:4.5 N:23.4 C1:1.1

### Comparative Example 1 (process of Patent Publication 1)

A four-necked flask, of a volume of 1 L, equipped with a condenser and a thermometer was charged with 15.06 g (160 mmol) of 2-aminopyridine, 8.11 g (50 mmol) of iron chloride (FeCl₃) and 800 ml of toluene. Then, a temperature was raised to 100 °C under the nitrogen atmosphere, and the mixture was reacted at 100 °C for 6 hours. After completion of the reaction, the reaction solution was cooled to room temperature, and filtered to obtain crude polyaminopyridine, the resulting crude polyaminopyridine was washed with 2 L of a mixed solvent of 28 wt% aqueous ammonia/methanol (volume ratio 1/4), further washed with methanol, and dried under reduced pressure to obtain 12.60 g of polyaminopyridine as an ocherous powder (yield 83.67 %). Since the resulting polymer was not dissolved in N,N-dimethylformamide, a number average molecular weight could not be measured by GPC.

### Assessment

Solubility of polyaminopyridines obtained in Examples 1-4 and Comparative Example 1 in various solvents was assessed. Polyaminopyridines were dissolved in tetrahydrofuran, toluene, xylene, dichloromethanes and water, respectively, to a resin concentration of 1 wt% and the state of the solution was observed visually. Complete dissolution was assessed as O, incomplete dissolution was assessed as Δ, and no dissolution was assessed as ×.

**Table 1**

| | solvent | | | | |
|---|---|---|---|---|---|
| | tetrahydrofuran | toluene | xylene | dichloromethane | water |
| Example 1 | ○ | ○ | ○ | ○ | × |
| Example 2 | ○ | ○ | ○ | ○ | × |
| Example 3 | ○ | ○ | ○ | ○ | × |
| Example 4 | Δ | Δ | Δ | Δ | ○ |
| Comparative Example 1 | × | × | × | × | × |

From Table 1, it is seen that polyaminopyridines obtained in Examples 1 to 3 are dissolved in various organic solvents. And, it is seen that polyaminopyridines obtained in Examples 4 are dissolved in water. To the contrary, polyaminopyridine according to the previous process was inferior in solubility in any of tested solvents.

### Example 5

A four-necked flask, of a volume of 1 L, equipped with a condenser and a thermometer was charged with 12.83 g (86.7 mmol) of 2,6-dichloropyridine, 8.25 g (86.7 mmol) of 2-aminopyridine, 1.98 g (2.16 mmol) of tris(dibenzylideneacetone)dipalladiun (0), 4.05 g (6.50 mmol) of 2,2'-bis(diphenylphosphino)-1,1'-binaphthyl, 25.00 g (260.1 mmol) of sodium-tert-butoxide and 800 mol of toluene. Then, a temperature was raised to 100 °C under the nitrogen atmosphere, and the mixture was reacted at 100 °C for 8 hours. After completion of the reaction, the reaction solution was cooled to room temperature, the reaction solution was added to 2 L of a mixed solvent of 28 wt% aqueous ammonia/methanol (volume ratio 1/4) and precipitates were filtered to obtain crude poly(2-(N-2-pyrimidyl)aminopyridine). The resulting crude poly(2-(N-2-pyrimidyl)aminopyridine) was washed with 0.5 L of a mixed solvent of 28 wt% aqueous ammonia/methanol (volume ratio 1/4), further washed with methanol, and dried under reduced pressure to obtain 14.68 g of poly(2-(N-2-pyrimidyl)aminopyridine) as a brown powder (yield 99.5 %). A number average molecular weight of the resulting poly(2-(N-2-pyrimidyl)aminopyridine) was 4500.

The resulting poly(2-(N-2-pyrimidyl)aminopyridine) had the following physical properties, and could be identified therefrom. IR(KBr):3400, 1422, 1149, 878, 776, 701 (cm⁻¹)

### Example 6

A four-necked flask, of a volume of 1 L, equipped with a condenser and a thermometer was charged with 12.83 g (86.7 mmol) of 2,6-dichloropyridine, 12.42 g (86.7 mmol) of 1-aminonaphthalene, 1.98 g (2.16 mmol) of tris(dibenzylideneacetone)dipalladium(0), 4.05 g (6.50 mmol) of 2,2'-bis(diphenylphosphino)-1,1'-binaphthyl, 25.00 g (260.1 mmol) of sodium-tert-butoxide and 800 mL of toluene. Then, a temperature was raised to 100 °C under the nitrogen atmosphere and the mixture was reacted at 100 °C for 8 hours. After completion of the reaction, the reaction solution was cooled to room temperature, the reaction solution was added to 2 L of a mixed solvent of 28 wt% aqueous ammonia/methanol (volume ratio of 1/4), and precipitates were filtered to obtain crude poly(2-(N-1-naphthyl)aminopyridine). The resulting crude poly(2-(N-1-naphthyl)aminopyridine) was washed with 0.5 L of a mixed solvent of 28 wt% aqueous ammonia/methanol (volume ratio of 1/4), further washed with methanol and dried under reduced pressure to obtain 17.22 g of poly(2-(N-1-naphthyl)aminopyridine) as a brown powder (yield 91.0 %). A number average molecular weight of the resulting poly(2-(N-1-naphthyl)aminopyridine) was 5500.

The resulting poly(2-(N-1-naphthyl)aminopyridine) had the following physical properties, and could be identified therefrom.
IR(KBr):3400, 1573, 1502, 1417, 1291, 1248, 1151, 774, 720(cm⁻¹)

### Example 7

A four-necked flask, of a volume of 1 L, equipped with a condenser and a thermometer was charged with 12.83 g (86.7 mmol) of 2,6-dichloropyridine, 12.50 g (86.7 mmol) of 3-aminonquinoline, 1.98 g (2.16 mmol) of tris(dibenzylideneacetone)dipalladium (0), 4.05 g (6.50 mmol) of 2,2'-bis(diphenylphosphino)-1,1'-binaphthyl, 25.00 g (260.1 mmol) of sodium-tert-butoxide and 800 mL of toluene. Then, a temperature was raised to 100 °C under the nitrogen atmosphere and the mixture was reacted at 100 °C for 8 hours. After completion of the reaction, the reaction solution was cooled to room temperature, the reaction solution was added to 2 L of a mixed solvent of 28 wt% aqueous ammonia/methanol (volume ratio of 1/4), and precipitates were filtered to obtain crude poly(2-(N-3-quinolyl)aminopyridine). The resulting crude poly(2-(N-3-quinolyl)aminopyridine) was washed with 0.5 L of a mixed solvent of 28 wt% aqueous ammonia/methanol (volume ratio of 1/4), further washed with methanol and dried under reduced pressure to obtain 10.26 g of poly(2-(N-3-quinolyl)aminopyridine) as a brown powder (yield 54.0 %).
A number average molecular weight of the resulting poly(2-(N-3-quinolyl)aminopyridine) was 5400.

The resulting poly(2-(N-3-quinolyl)aminopyridine) had the following physical properties, and could be identified therefrom.
IR(KBr):3400, 1573, 1500, 1417, 1292, 1248, 1151, 774, 720 (cm⁻¹)

### Assessment

Solubility of polyaminopyridines obtained in Examples 5 to 7 in various solvents was assessed. Polyaminopyridines were dissolved in tetrahydrofuran, N,N-dimethylformamide, toluene, and methanol, respectively, to a resin concentration of 1 wt% and the state of the solution was observed visually. Complete dissolution was assessed as O, incomplete dissolution was assessed as Δ, and no dissolution was assessed as ×. The results are shown 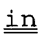 Table 2.

**Table 2**

| | solvent | | | |
|---|---|---|---|---|
| | tetrahydrofuran | N,N-dimethylformamide | toluene | methanol |
| Example 5 | Δ | Δ | Δ | ○ |
| Example 6 | ○ | ○ | ○ | × |
| Example 7 | ○ | ○ | ○ | × |

In addition, an energy level of a highest occupied molecular orbital (HOMO) of an electron, and an energy level of a lowest unoccupied molecular orbital (LUMO) of an electron of polyaminopyridines obtained in Examples 5 to 7, and a difference in energy levels (band gap energy) were measured by a cyclic voltammetry (CV) method. Specifically, a solution of polyaminopyridines in DMF was cast on a platinum electrode, and this was dried at 80 °C for 1 hour under reduced pressure to remove a solvent, to form a film on the electrode. By using the electrode, and using tetrabutylammonium tetrafluoroborate as an electrolysis substrate (0.1 mol/L), a CV curve was measured at 25 °C at a scanning rate of 50 mV/sec in acetonitrile using Ag/Ag⁺ as a reference electrode by an electrochemical analyzer (BAS Inc., trade name ALS Model 600B electrochemical analyzer), followed by calculation from its oxidation potential and reduction potential. Results are shown in Table 3.

**Table 3**

| | HOMO [eV] | LUMO [eV] | band gap energy [eV] |
|---|---|---|---|
| Example 5 | 5.2 | 2.7 | 2.5 |
| Example 6 | 5.3 | 2.8 | 2.5 |
| Example 7 | 5.5 | 2.6 | 2.9 |

From Table 2, it is seen that polyaminopyridines obtained in Examples 5 to 7 are dissolved in various solvents. From Table 3, it is seen that polyaminopyridines obtained in Examples 5 to 7 have a preferable energy level for a polymer-type organic electroluminescent material.

### Example 8

A four-necked flask, of a volume of 1 L, equipped with a condenser and a thermometer was charged with 12.83 g (86.7 mmol) of 2,6-dichloropyridine, 16.76 g (86.7 mmol) of 1-aminoanthracene, 1.98 g (2.16 mmol) of tris(dibenzylideneacetone)dipalladium (0), 4.05 g (6.50 mmol) of 2,2'-bis(diphenylphosphino)-1,1'-binaphthyl, 25.00 g (260.1 mmol) of sodium-tert-butoxide and 800 mL of toluene. Then, a temperature was raised to 100 °C under the nitrogen atmosphere and the mixture was reacted at 100 °C for 8 hours. After completion of the reaction, the reaction solution was cooled to room temperature, the reaction solution was added to 2 L of a mixed solvent of 28 wt% aqueous ammonia/methanol (volume ratio of 1/4), and precipitates were filtered to obtain crude poly(2-(N-1-anthryl)aminopyridine. The resulting crude poly(2-(N-1-anthryl)aminopyridine was washed with 0.5 L of a mixed solvent of 28 wt% aqueous ammonia/methanol (volume ratio of 1/4), further washed with methanol and dried under reduced pressure to obtain 22.97 g of poly(2-(N-1-anthryl)aminopyridine) as a yellowish brown powder (yield 99.5 %). A number average molecular weight of the resulting poly(2-(N-1-anthryl)aminopyridine) was 4530.

The resulting poly(2-(N-1-anthryl)aminopyridine) had the following physical properties, and could be identified therefrom.
IR(KBr):1157, 1417, 1395, 1351, 1260, 1165, 1142, 879, 779, 732 (cm⁻¹).

### Example 9

A four-necked flask, of a volume of 1 L, equipped with a condenser and a thermometer was charged with 12.83 g (86.7 mmol) of 2,6-dichloropyridine, 16.76 g (86.7 mmol) of 2-aminoanthracene, 1.98 g (2.16 mmol) of tris(dibenzylideneacetone)dipalladium (0), 4.05 g (6.50 mmol) of 2,2'-bis (diphenylphosphino)-1,1'-binaphthyl, 25.00 g (260.1 mmol) of sodium-tert-butoxide and 800 mL of toluene. Then, a temperature was raised to 100 °C under the nitrogen atmosphere and the mixture was reacted at 100 °C for 8 hours. After completion of the reaction, the reaction solution was cooled to room temperature, the reaction solution was added to 2 L of a mixed solvent of 28 wt% aqueous ammonia/methanol (volume ratio of 1/4), and precipitates were filtered to obtain crude poly(2-(N-2-anthryl)aminopyridine). The resulting crude poly(2-(N-2-anthryl)aminopyridine) was washed with 0.5 L of a mixed solvent of 28 wt% aqueous ammonia/methanol (volume ratio of 1/4), further washed with methanol and dried under reduced pressure to obtain 22.88 g of poly(2-(N-2-anthryl)aminopyridine) as a yellowish brown powder (yield 99.1 %). A number average molecular weight of the resulting poly(2-(N-2-anthryl)aminopyridine) was 5800.

The resulting poly(2-(N-2-anthryl)aminopyridine) had the following physical properties, and could be identified therefrom.
IR(KBr):1590, 1558, 1416, 1342, 1276, 1239, 1155, 890, ⁷³⁷ (cm⁻¹)

### Example 10

A four-necked flask, of a volume of 1 L, equipped with a condenser and a thermometer was charged with 12.83 g (86.7 mmol) of 2,6-dichloropyridine, 18.84 g (86.7 mmol) of 1-aminopyrene, 1.98 g (2.16 mmol) of tris(dibenzylideneacetone)dipalladium (0), 4.05 g (6.50 mmol) of 2,2'-bis(diphenylphosphino)-1,1'-binaphthyl, 25.00 g (260.1 mmol) of sodium-tert-butoxide and 800 mL of toluene. Then, a temperature was raised to 100 °C under the nitrogen atmosphere and the mixture was reacted at 100 °C for 8 hours. After completion of the reaction, the reaction solution was cooled to room temperature, the reaction solution was added to 2 L of a mixed solvent of 28 wt% aqueous ammonia/methanol (volume ratio of 1/4), and precipitates were filtered to obtain crude poly(2-(N-1-pyrenyl)aminopyridine). The resulting crude poly(2-(N-1-pyrenyl)aminopyridine) was washed with 0.5 L of a mixed solvent of 28 wt% aqueous ammonia/methanol (volume ratio of 1/4), further washed with methanol and dried under reduced pressure to obtain 25.04 g of poly(2-(N-1-pyrenyl) aminopyridine) as a brown powder (yield 99.5 %). A number average molecular weight of the resulting poly(2-(N-1-pyrenyl)aminopyridine) was 5400.

The resulting poly(2-(N-1-pyrenyl)aminopyridine) had the following physical properties, and could be identified therefrom.
IR(KBr) :1581, 1506, 1415, 1346, 1262, 1160; 843, 782 (cm⁻¹)

### Assessment

Solubility of polyaminopyridines obtained in Examples 8 to 10 in various solvents was assessed. Polyaminopyridines were dissolved in 1-methyl-2-pyrrolidone, N,N-dimethylformamide, chloroform and dichloromethane, respectively, to a resin concentration of 1 wt% and the state of the solution was observed visually. Complete dissolution was assessed as ○, incomplete dissolution was assessed as Δ, and no dissolution was assessed as ×.
The results are shown in Table 4.

**Table 4**

| | solvent | | | |
|---|---|---|---|---|
| | 1-methyl-2-pyrrolidone | N,N-dimethylformamide | chloroform | dichloromethane |
| Example 8 | O | Δ | O | O |
| Example 9 | O | Δ | O | O |
| Example 10 | O | Δ | O | O |

An energy level of a highest occupied molecular orbital (HOMO) of an electron, and an energy level of a lowest unoccupied molecular orbital (LUMO) of an electron of polyaminopyridines obtained in Examples 8 to 10, and a difference in energy levels (band gap energy) were measured by a cyclic voltammetry (CV) method.

Specifically, a solution of polyaminopyridines in DMF was cast on a platinum electrode, and this was dried at 80 °C for 1 hour under reduced pressure to remove a solvent, to form a film on the electrode. By using the electrode, and using tetrabutylammonium tetrafluoroborate as an electrolysis substrate (0.1 mol/L), a CV curve was measured at 25 °C at a scanning rate of 50 mV/sec in acetonitrile using Ag/Ag⁺ as a reference electrode by an electrochemical analyzer (BAS Inc., trade name ALS Model 600B electrochemical analyzer), followed by calculation from its oxidation potential and reduction potential. Results are shown in Table 5.

**Table 5**

| | HOMO [eV] | LUMO [eV] | band gap energy [eV] |
|---|---|---|---|
| Example 8 | 5.3 | 2.8 | 2.5 |
| Example 9 | 5.3 | 2.7 | 2.6 |
| Example 10 | 5.2 | 2.8 | 2.4 |

In addition, a solution (concentration:1 × 10⁻⁶ g/mL) of polyaminopyridines obtained in Examples 8 to 10 in 1-methyl-2-pyrrolidone was prepared, and a fluorescent wavelength was measured with a fluorescence spectrophotometer (Hitachi, Ltd., trade name F-3000). Results are shown in Table 6.

**Table 6**

| | fluorescent wavelength [nm] |
|---|---|
| Example 8 | 479 |
| Example 9 | 478 |
| Example 10 | 461 |

From Table 4, it is seen that polyaminopyridines obtained in Examples 8 to 10 are dissolved in various solvents. From Table 5, it is seen that polyaminopyridines obtained in Examples 8 to 10 have a preferable energy level for a polymer-type organic electroluminescent material. From Table 6, it is seen that polyaminopyridines obtained in Examples 8 to 10 have preferable fluorescent properties for a polymer-type organic electroluminescent material.

### Industrial Applicability

According to the present invention, novel polyaminopyridines which are preferably used in a cell active material, a polymer-type organic electroluminescent material and the like, and a process for preparing the same are provided.

## Claims

1. Polyaminopyridines having a repetition structural unit represented by the following general formula (1); 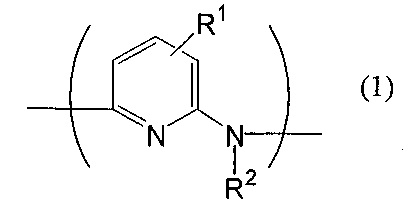 (wherein R¹ represents a hydrogen atom, an alkyl group of a carbon number of 1 to 10, an alkoxy group, an alkanoyl group, a carbamoyl group or a cyano group, and R² represents a phenyl group optionally having a substituent or a pyridyl group optionally having a substituent)
and having a number average molecular weight in a range of 500 to 1000000.

2. The polyaminopyridines according to claim 1, wherein R¹ is a hydrogen atom, and R² is a phenyl group or a pyridyl group in the general formula (1).

3. Polyaminopyridines having a repetition structural unit represented by the following general formula (1); 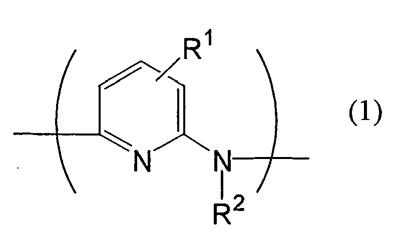 (wherein R¹ represents a hydrogen atom, an alkyl group of a carbon number of 1 to 10, an alkoxy group, an alkanoyl group, a carbamoyl group or a cyano group, and R² represents a pyrimidyl group optionally having a substituent, a naphthyl group optionally having a substituent or a quinolyl group optionally having a substituent)
and having a number average molecular weight in a range of 500 to 1000000.

4. The polyaminopyridines according to claim 3, wherein R¹ is a hydrogen atom, and R² is a pyrimidyl group, a naphthyl group or a quinolyl group in the general formula (1).

5. Polyaminopyridines having a repetition structural unit represented by the following general formula (1); 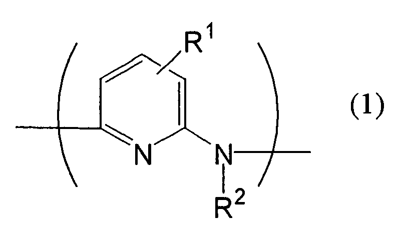 (wherein R¹ represents a hydrogen atom, an alkyl group of a carbon number of 1 to 10, an alkoxy group, an alkanoyl group, a carbamoyl group or a cyano group, and R² represents an anthryl group optionally having a substituent, or a pyrenyl group optionally having a substituent)
and having a number average molecular weight in a range of 500 to 1000000.

6. The polyaminopyridines according to claim 5, wherein R¹ is a hydrogen atom, and R² is an anthryl group or a pyrinyl group in a general formula (1).

7. A process for preparing polyaminopyridines having a repetition structural unit represented by the following general formula (1); 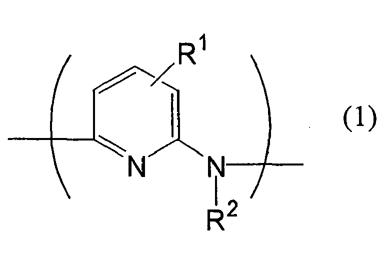 (wherein R¹ represents a hydrogen atom, an alkyl group of a carbon number of 1 to 10, and an alkoxy group, an alkanoyl group, a carbamoyl group or a cyano group, and R² represents a phenyl group optionally having a substituent or a pyridyl group optionally having a substituent)
and having a number average molecular weight in a range of 500 to 1000000, which comprises reacting 2,6-dihologenopyridines represented by the following general formula (2); 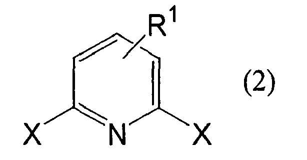 (wherein R¹ is as defined in the general formula (1), and X represents a halogen atom)
and an aromatic amine compound represented by the following general formula (3);
R²-NH₂ (3)
(wherein R² is as defined in the general formula (1)) using a palladium compound and a phosphine compound as a catalyst in the presence of a base.

8. A process for preparing polyaminopyridines having a repetition structural unit represented by the following general formula (1); 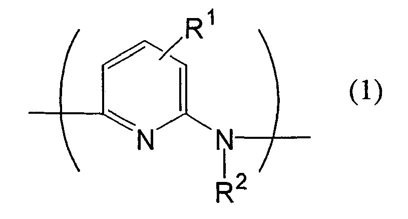 (wherein R¹ represents a hydrogen atom, an alkyl group of a carbon number of 1 to 10, an alkoxy group, an alkanoyl group, a carbamoyl group or a cyano group, and R² represents a pyrimidyl group optionally having a substituent, a naphthyl group optionally having a substituent or a quinolyl group optionally having a substituent)
and having a number average molecular weight in a range of 500 to 1000000, which comprises reacting 2,6-dihalogenopyridines represented by the following general formula (2); 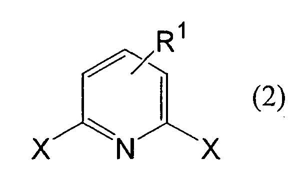 (wherein R¹ is as defined in the general formula (1), and X represents a halogen atom)
and an aromatic amine compound represented by the general formula (3);
R²-NH₂ (3)
(wherein R² is as defined in the general formula (1)) using a palladium compound and a phosphine compound as a catalyst in the presence of a base.

9. A process for preparing polyaminopyridines having a repetition structural unit represented by the following general formula (1); 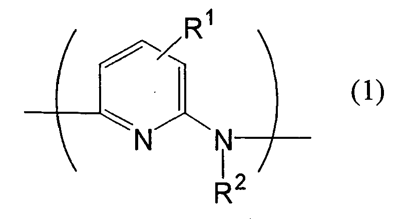 (wherein R¹ represents a hydrogen atom, an alkyl group of a carbon number of 1 to 10, an alkoxy group, an alkanoyl group, a carbamoyl group or a cyano group, and R² represents an anthryl group optionally having a substituent or a pyrenyl group optionally having a substituent)
and having a number average molecular weight in a range of 500 to 1000000, which comprises reacting 2,6-dihalogenopyridines represented by the following general formula (2); 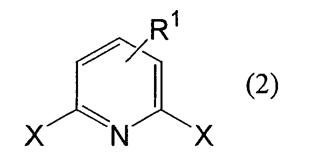 (wherein R¹ is as defined in the general formula (1), and X represents a halogen atom)
and an aromatic amine compound represented by the following general formula (3);
R²-NH₂ (3)
(wherein R² is as defined in the general formula (1)) using a palladium compound and a phosphine compound as a catalyst in the presence of a base.
